# EUROPEAN PATENT SPECIFICATION

(11) **EP 3 610 426 B1**
(45) Date of publication and mention of the grant of the patent: **06.07.2022**
(21) Application number: 18784640.7
(22) Date of filing: 10.04.2018
(51) Int. Cl.: G06Q 10/04, A01C 1/00, G06Q 50/02, A01B 79/00, A01C 21/00

(54) **AGRONOMY CALCULATOR TOOL AND METHOD**
AGRARRECHNER UND VERFAHREN
OUTIL ET PROCÉDÉ DE CALCUL AGRONOMIQUE

(30) Priority: 10.04.2017 US 201762483854 P
(43) Date of publication of application: 19.02.2020
(73) Proprietor: Decisive Farming Corp., Irricana, Alberta T0M 1B0 (CA)
(72) Inventor: COOLIDGE, Michael, Irricana, Alberta T0M 1B0 (CA); SCHMALTZ, Remi, Irricana, Alberta T0M 1B0 (CA); SCHMALTZ, Tasha, Irricana, Alberta T0M 1B0 (CA); DONALD, Garth, Irricana, Alberta T0M 1B0 (CA)
(74) Representative: Nederlandsch Octrooibureau
(86) International application number: PCT/CA2018/050441
(87) International publication number: WO 2018/187869

(56) References cited:
- CA-A1- 2 663 917
- CA-A1- 2 663 917
- CA-A1- 2 967 518
- US-A1- 2008 220 529
- US-A1- 2016 309 646
- Stine Lauren: "How Decisive Farming Hopes to Differentiate Itself in Frothy Digital Ag Space", AgFunderNews , 3 November 2016 (2016-11-03), pages 1-12, XP055643773, Retrieved from the Internet: URL:https://agfundernews.com/how-decisive- farming-hopes-to-differentiate-itself-in-f rothy-digital-ag-space.html

## Description

### TECHNICAL FIELD

This disclosure relates to computer-implemented methods and systems for managing farm-related commercial transactions. More particularly, this disclosure relates to computer-implemented methods and systems for identifying, evaluating and optimizing options for crop selection, crop rotations, and selection of crop production inputs.

### BACKGROUND

The size and scope of farming i.e. agricultural production enterprises have been increasing during the last two decades as the producers endeavored to increase productivity while maintaining or reducing their input costs and overhead costs. There is a large assortment of interactive web-based applications ("apps") now available for an agricultural producer to input their annual field-by-field production-related agronomic data for assimilation and correlation with the historical data for the fields, and then for assimilation of the correlated production data with related inputs and/or services data records pertaining to fertility and pest management to provide accurate historical data regarding annual and multi-year revenues and returns-on-investment generated by the different crops that were grown on those fields. The results of such data entries, processing, and reporting are commonly used by the producer to assess crop production options available for an up-coming growing season and to concurrently forecast revenues and profits for each of the crop options based on the historical crop performance of their fields.

Such applications generally used by agricultural producers for selection and assessment of their crop production options for a selected field, are generally based on a decision matrix that incorporates: (i) the producer's preferred crop rotation cycle for each field, (ii) the historical annual production data on that field for each crop option being considered, (iii) current commodity pricing and related futures forecasting for each crop option, (iv) projected input requirements and related costs for each crop option, (v) projections of crop yields correlated over a selected range of input quantities for selected input options for example, selected fertilizers and pesticides, and (vi) estimation of ranges of potential revenues and profits for each crop option related to the ranges of types and quantities of inputs selected for each crop options.

The current agricultural management apps are functionally "reactive" in their operation in that their calculated projections of yields, revenues, and performance efficiencies are based on mathematical processing of and correlations with historical data. Such apps make it possible for producers to monitor the current status of their current crop production cycle with regards to input costs, rates of plant growth and development, for the purpose of predicting yields and associated production costs. These types of apps can now be run on handheld devices such as tablets and smartphones as well as on portable and desktop computers.

Also available are a wide assortment of programs and apps for suppliers of ag-chemical products and services to support their supply planning for upcoming crop production season, for example estimation of the volumes of fertilizer products and pesticide products they need to bring into inventory in order to ensure adequate supplies to service their client base. It is now possible for an agricultural producer to integrate and synchronize one or more of their agronomic apps with a supplier's inventory apps to enable the producer and supplier to coordinate their planning activities and also, to negotiate set pricing for the supply of selected products and services.

Adding to the increasing complexity of managing an agricultural enterprise is the emerging trend of globalization of the commodity markets available for the agricultural producer to sell their harvested products into, and the rapid ripple effects that occur in the commodity markets in response to significant political or weather events and the immediate impacts on real or perceived supply/demand imbalances. Consequently, in addition to using multiple web-based apps to monitor and manage their crop production activities and inputs supplies, many agricultural producers are also using on a regular basis web-based apps for monitoring agricultural commodities markets and futures trading as tools to assist their agricultural production planning and for developing their commodity divesture strategies.

The net consequence of the deluge of prior-art web-based apps for inputting and monitoring data associated with agricultural production and commodities markets is that the prior-art web-based apps flood agricultural producers with overwhelming information directly or indirectly relating to their farming operations for them to monitor and track, which however, increases the burden to their decision making and actions.

CA 2 663 917 describes a variable zone crop-specific inputs prescription method and systems therefore.

US2016/309646A1 also discloses relevant background art.

### SUMMARY

The present disclosure generally relates to a computer-implemented web-based system and related methods for management of a producer's agricultural enterprise, as defined by the appended claims. The system disclosed herein generally comprises a plurality of modular components for receiving and processing data pertaining to agricultural production of commodities by the producer and for centralizing and storing the received and/or processed data in a single cloud-based data management platform that is interactive with multiple cloud-based databases.

According to one embodiment, an example of a single cloud-based data management platform comprises: (i) a Software-as-a-Service (SaaS) platform for hosting a plurality of business software applications for solely for the access and use by a single agricultural producer, and (ii) a Platform-as-a-Service (PaaS) platform for enabling the producer to provide limited and restricted access to some of their databases hosted on their SaaS platform, to selected suppliers and service providers so that the suppliers and service providers can monitor on-farm inventories and equipment/facilities records for the purpose of producing for the producer's review and decisions proposals and quotes for the delivery of products and services.

The producer can authorize restricted and authenticated access to their cloud-based agricultural enterprise data management platform, to one or more service providers so that together, they can effectively and cost-efficiently plan and manage the delivery of products and services during a crop production cycle, and the sale and delivery of agricultural commodities produced during the crop production cycle. Separate modular components may be provided for inputs exemplified by agronomy data, crop production inputs data, crop growth and performance tracking, commodity market data, weather monitoring and forecasting, farm equipment maintenance scheduling and tracking, enterprise management components, among others.

The agricultural enterprise methods disclosed herein generally comprise a multiplex of computer-executable programs for aggregating, processing, summarizing, reporting, and storing: (i) the crop performance and yield data inputs received and generated during each crop production cycle, and (ii) data received and generated pertaining to crop inputs and services provided by selected third-party suppliers and service providers.

According to another embodiment of the present disclosure, the present agricultural enterprise system and methods disclosed herein provide a screen display in the form of a dashboard wherein each of the data modules is displayed as an icon or alternatively a tab or alternatively a pictogram. According to one aspect, a high-level current status report from a selected data module may be called up by clicking on the pictogram associated with the data module. The current status report may be presented in the form of data associated with a time line, a bar chart, a pie chart, a bullet graph, a sparkline, and the like. According to one aspect, an agricultural producer's agricultural enterprise system is accessible by the producer and by their selected, authorized and authenticated third-party suppliers and producers, as a display on their networked mobile wireless telecommunication computing devices such as exemplified by smartphones, tablets, portable/laptop computers, or alternatively, with a desktop computer.

According to one aspect of the invention, there is provided a computer-implemented method according to claim 1 for optimal production of a selected crop to be grown on a field having one or more geospatial zones. The method comprises collecting and storing into one or more cloud-based databases at least soil testing data, predefined agronomic crop needs, and yield goals of the one or more geospatial zones; automatically producing a set of nutrient requirements of one or more nutrients at least based on the soil testing data, the predefined agronomic crop needs, and the yield goals; obtaining a fertilizer product set comprising one or more fertilizer products for applying to the one or more geospatial zones; receiving a first user input indicating a first fertilizer product from the fertilizer product set as a driver fertilizer product; calculating a fertilizer rate of the fertilizer product set based on the driver fertilizer product and the set of nutrient requirements; and determining a first agronomic prescription for applying the fertilizer product set to the one or more geospatial zones at the fertilizer rate for growing the selected crop.

In some embodiments, the one or more nutrients comprises at least one of nitrogen (N), phosphorus (P), and potassium (K).

In some embodiments, the set of nutrient requirements comprises requirements of one or more micronutrients.

According to the invention, said automatically producing the set of nutrient requirements comprises collecting and storing into the one or more cloud-based databases satellite imagery of the one or more geospatial zones; automatically obtaining geospatial zone delineation of the one or more geospatial zones from the satellite imagery; and automatically producing the set of nutrient requirements based on the soil testing data, the geospatial zone delineation, and the predefined agronomic crop needs and yield goals.

In some embodiments, said calculating the fertilizer rate of the fertilizer product set based on the driver fertilizer product and the set of nutrient requirements further comprises automatically updating the set of nutrient requirements based on said calculation of fertilizer rate of the fertilizer product set.

In some embodiments, said calculating the fertilizer rate of the fertilizer product set based on the driver fertilizer product and the set of nutrient requirements further comprises receiving an adjustment from the user; adjusting the calculated fertilizer rate of the fertilizer product set using the received adjustment; and automatically re-updating the set of nutrient requirements.

In some embodiments, said calculating the fertilizer rate of the fertilizer product set based on the driver fertilizer product and the set of nutrient requirements further comprises receiving from the user a rate for one of the fertilizer product set; setting the received rate as the fertilizer rate of the fertilizer product set; and automatically re-updating the set of nutrient requirements.

In some embodiments, said obtaining the fertilizer product set for applying to the one or more geospatial zones comprises receiving a second user input indicating at least one user-selected fertilizer product for at least one of the one or more nutrients; and including the at least one user-selected fertilizer product into the fertilizer product set.

In some embodiments, said obtaining the fertilizer product set for applying to the one or more geospatial zones comprises: receiving a third user input indicating a plurality of user-selected fertilizer products to be blended at a user-selected blend ratio; and including the blended plurality of user-selected fertilizer products into the fertilizer product set.

In some embodiments, the computerized method further comprises receiving a fourth user input indicating a second fertilizer product from the fertilizer product set as the driver fertilizer product; and repeating said calculating the fertilizer rate of the fertilizer product set based on the driver fertilizer product and the set of nutrient requirements.

In some embodiments, said obtaining the fertilizer product set for applying to the one or more geospatial zones comprises obtaining the fertilizer product set from a second agronomic prescription; and said calculating the fertilizer rate of the fertilizer product set comprises obtaining the fertilizer product set from the second agronomic prescription.

In some embodiments, the computerized method further comprises saving the first agronomic prescription in the one or more cloud-based databases.

In some embodiments, the computerized method further comprises providing a workflow interface for accessing and modifying the first agronomic prescription.

In some embodiments, said providing the workflow interface for accessing and modifying the first agronomic prescription comprises: providing a workflow interface for re-obtaining the fertilizer product set comprising one or more fertilizer products for applying to the one or more geospatial zones.

According to one aspect of this disclosure, another aspect of the invention, there is provided a computer system according to claim 14 for optimal production of a selected crop to be grown on a field having one or more geospatial zones. The computer system comprises a memory; one or more cloud-based databases; a network or a communication connection; and a processor coupled to the memory, the one or more cloud-based databases, and the network or the communication connection. The processor, the memory, the one or more cloud-based databases, and the network or the communication connection form a single computerized platform for collecting and storing into one or more cloud-based databases at least soil testing data, predefined agronomic crop needs, and yield goals of the one or more geospatial zones; automatically producing a set of nutrient requirements of one or more nutrients at least based on the soil testing data, the predefined agronomic crop needs, and the yield goals; obtaining a fertilizer product set comprising one or more fertilizer products for applying to the one or more geospatial zones; receiving a first user input indicating a first fertilizer product from the fertilizer product set as a driver fertilizer product; calculating a fertilizer rate of the fertilizer product set based on the driver fertilizer product and the set of nutrient requirements; and determining a first agronomic prescription for applying the fertilizer product set to the one or more geospatial zones at the fertilizer rate for growing the selected crop.

According to a third aspect of the invention, there is provided a computer-readable storage device according to claim 27 comprising computer-executable instructions for optimal production of a selected crop to be grown on a field having one or more geospatial zones. The instructions, when loaded into a memory of a single computerized platform and executed, cause a processor to perform actions comprising collecting and storing into one or more cloud-based databases at least soil testing data, predefined agronomic crop needs, and yield goals of the one or more geospatial zones; automatically producing a set of nutrient requirements of one or more nutrients at least based on the soil testing data, the predefined agronomic crop needs, and the yield goals; obtaining a fertilizer product set comprising one or more fertilizer products for applying to the one or more geospatial zones; receiving a first user input indicating a first fertilizer product from the fertilizer product set as a driver fertilizer product; calculating a fertilizer rate of the fertilizer product set based on the driver fertilizer product and the set of nutrient requirements; and determining a first agronomic prescription for applying the fertilizer product set to the one or more geospatial zones at the fertilizer rate for growing the selected crop.

### BRIEF DESCRIPTION OF THE DRAWINGS

The present disclosure will be described in conjunction with reference to the following drawings in which:
FIG. 1 is a diagrammatic illustration of one embodiment of a system and a method disclosed herein for capturing, processing, managing and outputting data relating to an agricultural enterprise, and for controlling access and use of the output data by third-party service providers;
FIG. 2 is a diagrammatic illustration of another embodiment of a method disclosed herein for capturing, processing, managing and outputting data relating to an agricultural enterprise, and for controlling access and use of the output data by third-party service providers;
FIG. 3A is a diagrammatic illustration of an exemplary Agronomy Calculator method disclosed herein, used for creation of an agronomic prescription for application of a straight fertilizer product to a selected crop on a selected field;
FIGs. 3B to 3C are screenshots showing the exemplary Agronomy Calculator method shown in FIG. 3A;
FIG. 4 is a diagrammatic illustration of an exemplary Agronomy Calculator method disclosed herein, used for creation of an agronomic prescription for application of a blended fertilizer product to a selected crop on a selected field, based on a guaranteed nutrient analysis;
FIG. 5 is a diagrammatic illustration of an exemplary Agronomy Calculator method disclosed herein, used for creation of a new agronomic prescription by modifying an existing agronomic prescription;
FIG. 6 is a schematic diagram showing a general structure of the system shown in FIG. 1 in the form of a computerized network system;
FIG. 7 shows a hardware structure of a computing device of the computerized network system shown in FIG. 6; and
FIG. 8 shows a simplified software architecture of the computing device shown in FIG. 7.

### DETAILED DESCRIPTION

The embodiments of the present disclosure generally relate to computer-implemented methods and a related system for agricultural enterprise management by an agricultural producer wherein all of annual data collected and/or generated, on a year-to-year basis, that pertain to the producer's: (i) farmlands' physicochemical and topographical characteristics, (ii) pre-sowing crop production planning and crop selection processes, (iii) actual crops produced on each of the individual fields comprising the farmlands, (iv) crop production inputs used to optimize a selected crop's growth, development, and productivity on each of the individual fields, (v) agronomy services engaged prior to and during the crop production cycle, (vi) crop yields harvested from each of the individual fields, (vii) sales and revenue-generated data for harvested crops, (viii) overhead expenditures incurred to produce each crop on each field and for managing the entire farmlands operation during a production cycle, (ix) financing of costs related to acquisition of the individual fields, acquisition of capital equipment, crop production costs, costs related to storage of harvested crops, delivery of harvested crops to purchasers, inventory records, and sales records relating to the harvested crops, (x) enterprise-related insurance costs, (xi) enterprise management overhead costs, (xii) production cost analyses and return-on-investment data, (xiii) lists of service providers, (xiv) weather data, (xv) commodity market performance relating to the grower's crops during the crop production cycle plus one cycle or two cycles or three cycles of monthly or annual commodity market performance specifically pertaining to the selected crops, are consolidated and centralized into a single database.

All of the data collected and/or processed and/or generated and/or summarized and/or reported during an annual crop production cycle for each of the afore-mentioned categories are referred to herein as an annual data set, while each of the individual data sets collected and/or processed and/or generated and/or summarized and/or reported for each of the afore-mentioned categories are referred to herein as a data subset. Previously collected and/or generated annualized historical data for a producer's agricultural enterprise can be inputted or imported into the agricultural enterprise management system disclosed herein for use in correlating and assessing costs, performance efficiencies, revenues, and returns-on-investment for each of the afore-mentioned categories, over selected periods of multiple crop production cycles.

The consolidated annual data and data subsets collected, generated, summarized, reported with the agricultural enterprise management computer-aided methods and stored in a database component of the related system disclosed herein, are accessible and easily searched or manipulated by the agricultural producer or a service provider using a networked mobile wireless telecommunication computing device exemplified by smartphones, tablets, portable laptop computers, or alternatively, a desktop computer. The annual data and data subsets input into the system or which are alternatively generated by the computer-implemented methods, are provided as a "dashboard display" on the producer's networked computing device wherein each of the afore-mentioned categories is displayed as an individual pictogram. Pictograms are commonly referred as computer icons. The agricultural enterprise management methods and system disclosed herein enable an agricultural producer to consolidate the inputting, processing, analyzing, summarizing and reporting all of the annual agronomic data, data pertaining to purchase and application of crop inputs products and services, crop production and yield data, commodity market performance relating to the grower's crops, crop inventory and sales data, and other key crop production data in a single application, to assist the grower in their annual crop planning, their management of the crop production activities, and sales of their harvested crops.

The agricultural producer may make available to selected third-party service providers and inputs providers on a restricted individual case-by-case basis using a gateway-controlled restriction protocol, access to one or of the data modules described herein. An authorized third-party service provider would have "read-only" access or alternatively, a mix of read-only access and read/write access to the crop production planning data module and additionally, to the historical data and data subsets in modules authorized by the producer, that directly relate to the services and/or products that they provide or alternatively wish to provide to the agricultural producer during the producer's crop production planning activities, managing their current crop production, storage, marketing and delivery of their harvested crops and/or other agricultural products. The authorized third-party service provider would then be able to provide the producer with a selection of options for the products and services that could be provided for the up-coming crop production season or cycle. If the producer chooses to proceed with one of the options proposed by the authorized third-party service provider, the methods and system disclosed herein will generate and save a related work order in the module and forward a copy of the work order to the authorized third-party service provider. A work order could list, for example, (i) a description of the product and/or service to be delivered, (ii) a date or alternatively, a list of dates for delivery of the product and/or service, (iii) pricing for the delivered product and/or service, (vi) online electronic payment options for selection and use by the producer, with payment verification, (v) completion confirmation section for confirming that the delivered product and/or service and the date(s) of delivery, (vi) comments section for entries by the producer and/or the authorized third-party service provider pertaining to the product and/or service and their delivery. A work order may optionally include a selection of predefined steps for inclusion of the delivery of services, and the formation of automated workflow patterns whereby a customizable workflow map may be created around the steps a service provider selects for inclusion for a selected producer.

Unless defined otherwise, all technical and scientific terms used herein have the same meaning as commonly understood by one of ordinary skill in the art to which the invention belongs. Certain terms are discussed in the specification to provide additional guidance to the practitioner in describing the methods, uses and the like of embodiments of the invention, and how to make or use them. It will be appreciated that the same thing may be said in more than one way. Consequently, alternative language and synonyms may be used for any one or more of the terms discussed herein. No significance is to be placed upon whether or not a term is elaborated or discussed herein. Recital of one or a few synonyms or equivalents does not exclude use of other synonyms or equivalents, unless it is explicitly stated. Use of examples in the specification, including examples of terms, is for illustrative purposes only and does not limit the scope and meaning of the embodiments of the invention herein. To facilitate understanding of the disclosure, the following definitions are provided.

As used herein, the term "ag retailer" means any retail organization that supplies producers with: (i) products such as seed, nutrients, agrichemicals, crop protection products, feed, equipment and technology, and (ii) services such as seed, nutrients, crop protection products, feed, equipment and technology.

As used herein, the terms "ag-chemical" and "agrichemicals" mean any of chemical fertilizer products, hormones, growth agents, insecticides, herbicides, fungicides, nematicides, and the like.

As used herein, the term "agronomic prescription" means a mapping of variable-rate fertilizer application to an individual field based on soil testing results and the fertility requirements for a selected crop to be grown on the field. An agronomic prescription may additionally include agronomic prescriptions for types and timing of pesticide applications to be made during the crop production cycle.

As used herein, the term "Agronomy Calculator" means an embodiment of the present invention that pertains to a method according to claim 1 and system according to claim 14 for determining variable-rate fertilizer requirements for fields comprised of one or more management zones.

As used herein, the term "agronomy services" means services provided by an unrelated third-party service provider to the agricultural producer, pertaining to technical data and/or advice regarding an individual field and or the farmlands regarding the physicochemical condition of the individual field(s), and/or to crop production options for each of the individual fields and/or to crop development performance during a crop production cycle. Agronomy services may include one or more of and are exemplified by variable-rate fertilizer prescription maps, seed prescription maps, fungicide prescription maps, production zone management, benchmark soil sampling, in-season soil testing, fertility planning, nutrient management, manure management, multi-year crop rotation planning, herbicide rotation planning, crop variety planning and selections, seeding rate calculations and recommendations, GPS field mapping, crop scouting, plant tissue analyses, seed analyses, planting timing, weed management, insect management, disease management, irrigation management, swath timing, harvest timing, record keeping, yield targets and estimates, cost-of-production analyses, risk and tolerance analyses, and the like.

As used herein, the term "capital investment" means money used to purchase a fixed asset such as land, fixed-in-place machinery and/or equipment, rolling machinery and/or equipment, buildings, and the like.

As used herein, the term "costs of sales" means all of the direct costs incurred by the agricultural producer to produce and harvest a crop from an individual field during a crop production cycle. Direct costs may include the cost of seeds, starting plant material, juvenile livestock, juvenile poultry, crop production inputs exemplified by fertility products, feed, pesticides, labor hired for sowing, application of fertility and/or pesticide products, harvesting, fuel costs for equipment to work an individual field during a crop production cycle, agronomic service fees, and the like.

As used herein, the term "crop production" means all of the activities associated with planning, planting, growing, harvesting, and all related management activities for a crop selected for an individual field for a growing cycle. For most grain crops, fruit crops, berry crops, crop production occurs once on an annual basis. For biomass crops such as hay, alfalfa and the like, crop production may occur twice or three times or four times on an annual basis. Depending on the types of products delivered to market, dairy production, poultry production and the like may occur on a daily basis, a weekly basis, a monthly basis, a multi-monthly basis, an annual basis. Depending on the types of products delivered to the market, livestock production may occur on a monthly basis, a multi-monthly basis, an annual basis, or a multi-year basis.

As used herein, the term "dashboard display" means a single page web-based real-time user interface displaying on a mobile wireless telecommunication computing device and/or a desktop computer, a series of links or tabs or pictograms that are linked to the modular data input components described herein for showing graphical presentation of the current and historical data and data subsets residing within the modules that may be filtered and/or navigated using a content search field based on defined query string parameters. The user interface may be designed to display the data and data subsets in relation to geo-spatial maps and/or as colorful summaries and/or graphics exemplified by bar charts, pie charts, bullet graphs, sparklines and the like.

As used herein, the term "driver" means a selectable function specific to one of the selected nutrients, resulting in an automated calculation of fertilizer rates according to a predefined set of nutrient requirement rates for the selected crop type.

As used herein, the term "farmlands" means all of an agricultural producer's land used for crop production exemplified by grain production and biomass production and/or livestock production and/or dairy production and/or poultry production and/or fruit production and/or berry production.

As used herein, the term "fertilizer rate" means a specified rate of a fertilizer product set to be applied to a specific management zone in the field. In various embodiments, the fertilizer product set may comprise straight fertilizer product(s) and/or blended fertilizer product(s).

As used herein, the term "straight fertilizer product" means any product, natural or manufactured, designed to deliver a specific amount of one or more nutrients to a plant.

As used herein, the term "blended fertilizer product" means a combination of straight fertilizer products, conventionally represented by a guaranteed analysis.

As used herein, the term "guaranteed analysis" means a ratio of nutrients delivered through a blend of multiple fertilizer products.

As used herein, the term "individual field" means one discreet plot of land with defined cultivated borders.

As used herein, the term "manual" means a selectable function specific to one of the nutrients, resulting in a manual entry or adjustment of fertilizer rates.

As used herein, the term "nutrient requirements" means a set of calculated values of actual nutrient required to achieve a specific yield. Nutrient requirements as discussed herein are based on: (i) available soil testing data for a specific zone in a field as delineated by a geospatial fertility map, or (ii) agronomic nutrient requirements for the crop being grown, or (iii) a predefined yield goal for a selected zone.

As used herein, the term "overhead costs" means all costs related to the ongoing costs associated with operating and managing the agricultural enterprise. Overhead costs may include land rental fees, debt service fees, line-of-credit fees, electricity, heating, other utilities, fuel, building maintenance and repairs, equipment maintenance and repairs, insurance, taxes, financial services such as book-keeping fees, accounting fees, and the like, legal services, travel, telecommunications equipment and fees, and other types of miscellaneous costs that are not directly attributable to the cost of producing a product during a crop production cycle.

As used herein, the term "PaaS" means a "platform as an enterprise service" a computing platform, typically including operating system, programming language execution environment, database, and web server for use by service providers for integrating their software with the agricultural producer's SaaS platform without the cost and complexity to the agricultural producer of having to buy and manage the suppliers' underlying hardware and software layers.

As used herein, the term "physicochemical characteristics" means the physical properties and characteristics in combination with the chemical composition of the top layers of soil within an individual field. The top layer of soil may have a depth of up to one meter from the soil surface.

As used herein, the term "products applied" means a listing of one or more prescribed ag-chemical products (fertilizers and/or pesticides) that were applied at specified rates of application at selected times on a selected field in accordance with an agronomic prescription or a task.

As used herein, the term "SaaS" means a "software as a service" delivery model for a plurality of business software applications exemplified by office and messaging software, database management system software, business management software, accounting software, collaboration software, customer relationship management, management information systems, enterprise resource planning, service desk management software, invoicing software, human resource management software, payroll processing software, and the like.

As used herein, the term "satellite imagery" means visual images recorded by devices carried in space by satellites above the earth's atmosphere, and includes high-resolution near-infrared imagery, far-infrared imagery, multispectral imagery, hyperspectral imagery, panchromatic imagery, light detection and ranging (LIDAR) imagery, digital elevation model (DEM) imagery, and the like. It is to be noted that the scope of the present disclosure encompasses high-resolution areal imagery captured by recording devices deployed within the earth's atmosphere, wherein the recording devices are carried by airplanes or drones.

As used herein, the term "service provider" means a third-party that is qualified to provide to agriculture producers, consultative services pertaining to one or more aspects of the agricultural enterprise such as crop scouting, soil testing, field mapping, custom planting, nutrient applications, pesticide applications, and development of nutrient management and conservation plans, financial advice or services, or crop marketing advice or trade execution services. Such services may be on a fee basis. Non-limiting examples of service providers include ag retailers, agronomic services providers, crop sowing contractors, fertilizer application service providers, pesticide application service providers, crop scouting service providers, harvesting service providers, crop hauling and delivery service providers, equipment dealerships, equipment maintenance and repair service providers, weather and weather forecasting services, financial services, accounting services, insurance services, telecommunications and internet services, commodity brokering services, and the like.

As used herein, the term "task" means a designated workflow pertaining to a specific selected field and which is initiated by one of: (i) the submission of a scouting report, (ii) the creation of an agronomic prescription for the selected field (without the prior submission of a scouting report), or (iii) a recording of "applied products" in situations wherein a scouting report is not available and an agronomic prescription for the selected field has not been created.

As used herein, the term "topographical" means the three-dimensional vertical and horizontal profile of an individual field and can be characterized by the changes in elevation and slope and orientation to the earth's magnetic field (i.e., north, south, east, west compass points).

An example of an agricultural enterprise management system disclosed herein generally comprises a single cloud-based data management platform that is interactive with multiple cloud-based databases, and is accessible with a variety of mobile wireless telecommunication computing devices exemplified by smartphones, tablets, portable laptop computers, smart watches, smart glasses, wearable devices, or alternatively, with desktop computers. The agricultural enterprise management system comprises a plurality of modules for inputting crop planning production data inputs for processing and analysis by the methods disclosed herein for the purposes of aiding in selection of a crop for production on a selected individual field from the farmlands, for generating an agronomic prescription for the individual field, for generating one or more related work orders for transmittal to one or more suppliers and/or service providers, for monitoring crop growth and development performance data during the crop production cycle, for performing SWOT analyses and risk assessments prior to and during the crop production cycle, for monitoring commodity market prices and use of such data for calculating revenue projections and return-on-investment forecasting.

An agricultural enterprise management system according to the present disclosure may comprise data input modules pertaining to:
(i) agricultural production data collected on an individual latitude and longitude within a field for multiple cropping cycles including sowing, spraying, top dressing, irrigation, and harvesting dates, crop types sown, yield target, yield data, environmental data regarding temperatures, precipitation, moisture, wind, and sunlight hours throughout each cropping cycle;
(ii) multiple cropping cycle records pertaining to variable zone-based agronomic prescriptions for optimized production of selected crops in selected agricultural fields, based on correlations of selected satellite imagery with soil sample analyses, agronomic prescriptions, historical crop production records, and historical weather data;
(iii) ag-chemical input records and costs for each annual cropping cycle wherein the ag-chemicals are characterized by crop, chemical type, chemical manufacturer or blender, soil characteristics, major nutrients and minor nutrients;
(iv) an Agronomy Calculator comprising agronomic formulae for processing of soil physicochemical data and/or satellite imagery correlatable to the soil physicochemical properties of a selected farmland field or fields;
(v) work order entry and tracking module for an authorized service provider to generate a dedicated inventory of a product and/or a service for delivery to the producer, tracking of the delivery progress, and confirmation of delivery, and alternatively, for generating an order for an agronomic service or a technical service, delivery of the agronomic service or technical service, and a report summarizing the service delivered. Alternatively, the work order entry and tracking module may be used by the producer to initiate a work order that is then delivered to one or more selected producers;
(vi) inventory records and management for crops held on-farm, and optionally, electronic sensors for monitoring inventories of selected inputs and/or agricultural commodities produced and held in on-farm storage;
(vii) historical data pertaining to commodity demands, volumes delivered, and pricing;
(viii) real-time feeds of commodity market pricing on an hourly and/or daily and/or monthly basis correlated with valuation of the producer's market position and current outstanding contracts for margin tracking;
(ix) crop sales and return-on-investment (ROI) data on a cropping cycle basis;
(x) risk identification, assessment, and management modules for (a) crop production, and (b) commodity markets (supply and demand);
(xi) equipment inventory, maintenance and operations costs, and performance efficiency tracking;
(xii) User authentications authorizing access to third-party software, for the purpose of either automated or manually initiated transfer of data.
(xiii) a plurality of predictive modelling algorithms for performance of real-time "what if' analyses prior to and during a crop production cycle to facilitate production management decisions to respond to global weather events and/or economy fluctuations;
(xiv) a plurality of algorithms for assimilating outputs from the above components into dashboard summaries of "key performance indicators" (KPIs) that provide high-level snapshots of real-time crop production performance with "SWOT" (strength-weakness-opportunity-threat) analyses during a crop production cycle, to enable management decisions to modify crop management activities in order to optimize production outputs and revenues captured; and optionally
(xv) a farm data and service marketplace module wherein the sale, exchange, collection and connection of all farm data sets are input into a single database or multiple inter-connected databases wherein the individual data sets can be combined with other relevant data sets exemplified by soil, annual weather, and market information data sets that are directly related to the producer's farmlands.

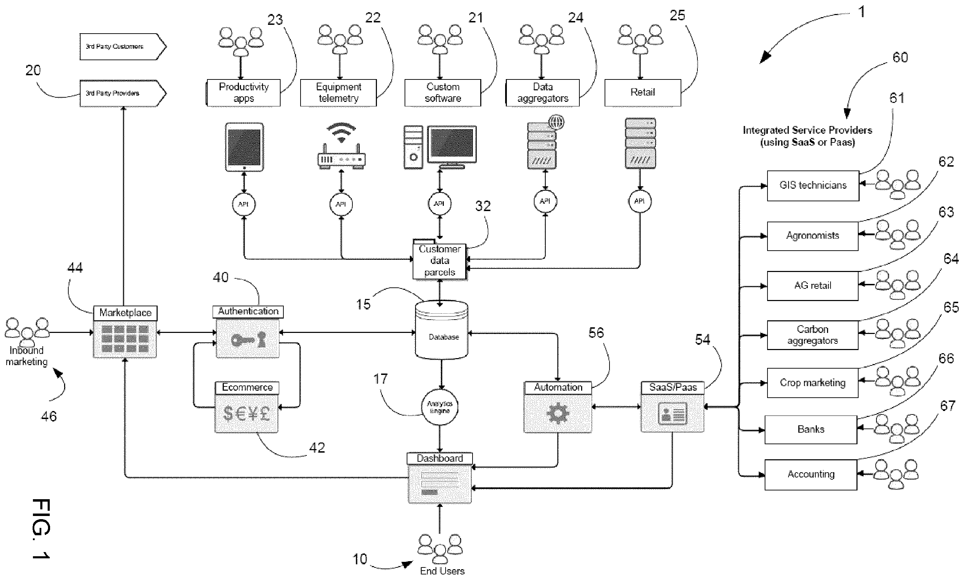

An embodiment of an agricultural enterprise management system 1 is shown in FIG. 1 and generally comprises a cloud-based database 15, a plurality of modules 20 for receiving certain specific types of data inputs wherein the data inputs are processed and summarized and consolidated in an outputs module 32. The processed data may be further analyzed by a number of computer-executable analytics programs 17 and the results displayed on a screen format 12 accessible by the agricultural producer 10, in the form of a dashboard with multiple pictograms related to the individual modules 21, 22, 23, 24, 25 comprising the plurality of modules 20. Access to the producer's 10 cloud-based database 15 and the outputs module 32 is available to third parties 46, 60 selected by and authorized by the producer 10 via a gateway-controlled restriction protocol and authentication portal 40. The producer 10 may make access available to some third parties 46 who may be potential clients for the producer's products, to the producer's marketplace module 44. The producer may make access available to their cloud-based database 15 and the outputs module 32 via a gateway-controlled restriction protocol and authentication portal 40 to some third parties 60 who may be suppliers of crop production inputs or alternatively service providers exemplified by GIS technicians 61, agronomists 62, retailers of agricultural input products 63, carbon aggregators 64, crop marketing representatives 65, financial institutions 66, accounting services 67, and the like. The agricultural enterprise management system 1 additionally comprises a computer-implemented component 56 for generating agronomic prescriptions and related work orders that are transmitted electronically to selected suppliers and/or service providers, and which are accessible by the selected suppliers and/or service providers via the gateway-controlled restriction protocol and authentication portal 40. Additionally, the agricultural enterprise management system 1 additionally comprises a computer-implemented ecommerce component 42 for receiving payments from the producer's customers for the agricultural products they have purchased, and for making payment to the producer's suppliers for crop production inputs ordered by and delivered to the producer, and to the producers service providers for the services ordered by and delivered to the producer.

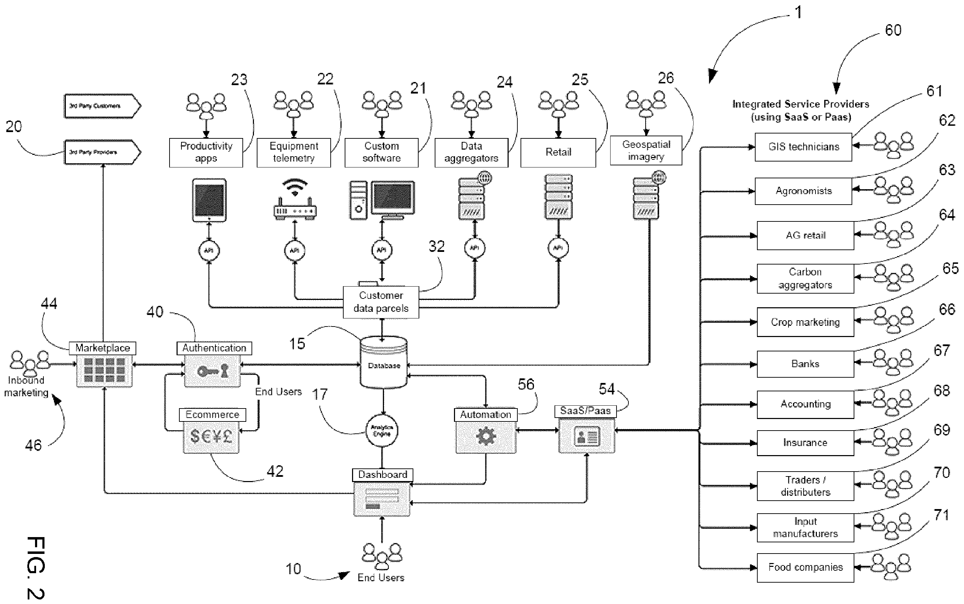

The agricultural enterprise management system 1 shown in FIG. 1 can be expanded by integration of additional data input modules, for example geospatial imagery 26 (FIG. 2) and/or by addition of more suppliers and service providers such as insurance agencies 68, wholesale distributors 69, manufacturing companies 70, food processors 71, and the like (FIG. 2).

In summary, the agricultural enterprise management system and methods disclosed herein aggregates in a single computer-implemented system, the many services used by an agricultural producer prior to and during a crop production cycle, and post-harvest marketing and delivery of the agricultural products to the producers' customers. The present system and methods provide the capability for consolidating, processing, analyzing, assessing, and summarizing a producer's current production data with their historical production data. The producer's crop production data and their crop-planning data can be made available to selected third-party suppliers and service providers via a gate-controlled, restricted and authorized basis to enable the suppliers and service providers to assess the producer's needs for crop input products and crop production services, and to provide cost/benefit analysis-based supply proposals and/or service proposals for the producer's consideration. The present agricultural enterprise management system and methods will then generate and provide agronomic prescriptions and work orders to selected suppliers and service providers, and additionally generate alerts for the producer and the selected suppliers and service providers to ensure that the ordered products and services are timely delivered.

The present invention is defined by a method according to claim 1, a system according to claim 14 and a computer-readable storage device according to claim 27 for determining variable-rate fertilizer requirements for fields comprised of one or more management zones. The present method according to claim and system according to claim 14 for determining variable-rate fertilizer requirements is referred to as an "Agronomy Calculator" module.

The Agronomy Calculator module uses available soil testing data, geospatial zone delineation, and predefined agronomic crop needs and yield goals to produce a first set of nutrient requirements as a starting point, to which fertilizer rate calculations are applied, as will be described in more detail below. The Agronomy Calculator module obtains geospatial zone delineation of the one or more geospatial zones from the satellite imagery.

The Agronomy Calculator module may provide agronomists with a standardized workflow interface for automatically calculating and updating fertilizer rates wherein a mix of straight and blended fertilizer products are to be applied to the field using one or more selected fertilizers as the driver of fertilizer rate calculations for all management zones in the field. According to another aspect, the Agronomy Calculator module allows for existing agronomic prescriptions, including any specified driver functions to be applied as a template for subsequent fields, where fertilizer rates are automatically calculated based on the nutrient requirements of a selected field. According to another aspect, the Agronomy Calculator module may be incorporated into and cooperate therewith the present agricultural enterprise management system according to the present disclosure. According to another aspect, the Agronomy Calculator module may be configured for use as a stand-alone app for use with a producer's computers and mobile devices, third-party suppliers' computers and mobile devices, third-party service providers' computers and mobile devices.

The Agronomy Calculator module relates to methods according to claim 1 for efficiently creating agronomic prescriptions. Some of the features of the present Agronomy Calculator module include: (i) automation of the calculation of fertilizer product requirements in relation to predefined nutrient requirements, (ii) automatic updating of nutrient requirements based on adjustments to the fertilizer rates and/or product inclusions, (iii) automation of the calculation of fertilizer rates for any combination of straight and blended fertilizer products in relation to a baseline set of nutrient requirements, (iv) an ability to add-in micronutrient fertilizers to the guaranteed analysis and/or agronomic prescription. Other features of the Agronomy Calculator module include a reduction in data entry requirements pertaining to: (v) updates to crop yield goals, crop nutrient requirements or fertilizer rates for an existing agronomic prescription or for an agronomic prescription in development, (vi) a selected fertilizer product used as a driver of fertilizer rate calculations thereby resulting in automated updating of related fertilizer inputs and actual nutrient calculations, (vii) use of a fertilizer product for manual calculation of fertilizer rates resulting in automated updating of related fertilizer inputs selected as drivers and updating of all actual nutrient calculations, and/or (viii) an agronomic prescription is required for subsequent fields and a previously created agronomic prescription is to be used. Other features of the present Agronomy Calculator module include: (ix) sequential workflow controls for the calculation of fertilizer rates where a combination of fertilizer products are being used, (x) sequential workflow processes that are easier for users to understand and repeat, and (ix) sequential workflow processes that allow flexibility for a user to navigate to previous steps within the processes in order to make adjustments, while retaining any input sources that were previously defined by the user whereby the calculated fertilizer rates and nutrient requirements are updated as changes are made. The present Agronomy Calculator module has the flexibility to specify a guaranteed analysis (i.e. nutrient ratio made available through a combination of fertilizer products) wherein a single nutrient source may be selected as the "driver" for the overall calculation of fertilizer rates for one or more management zones, according to the specified guaranteed analysis in relation to the starting nutrient requirements for a selected crop. The present Agronomy Calculator module has the flexibility to add a second guaranteed analysis wherein a second nutrient source may be selected as the "driver" for the overall calculation of fertilizer rates according to the specified guaranteed analysis, in relation to the original nutrient requirements and in consideration of the first guaranteed analysis. The present Agronomy Calculator module has the flexibility to add one or more straight fertilizer products, wherein a specified fertilizer product may be selected as the "driver" for the overall calculation of fertilizer rates according to the fertilizer product composition, in relation to the original nutrient requirements and in consideration of the first guaranteed analysis. The present Agronomy Calculator module has the flexibility to modify auto-calculated fertilizer rates by switching to a manual function wherein a single nutrient source was previously selected as the "driver" of the overall calculation of fertilizer rates. Furthermore, the present Agronomy Calculator module has the ability to save a particular configuration of products and drivers so that it may be applied to agronomic prescriptions for other fields.

It is to be noted that the Agronomy Calculator module may form an integral component of the agricultural enterprise management system and methods disclosed herein and may be accessed, for example, by way of a pictogram 23 on a module 20 accessible by an agronomist service provider (FIGs. 1, 2).

However, the present Agronomy Calculator module can also be configured as a stand-alone app for creation and development of agronomic prescriptions by an agronomist for their clients without having to access and/or use another agricultural enterprise management system and methods.

Herein is also disclosed that the agricultural enterprise management system may be a computerized network system and can communicate with the producer, third-party suppliers, third-party service providers, pieces of equipment or the database by any suitable wireless communication technique. For example, the system can communicate through cellular communication technology or satellite communication technology. It is to be understood that the various pieces of equipment used the producer's agricultural enterprise may incorporate the appropriate hardware, e.g., transmitters, receivers, amplifiers, etc., and/or software to enable effective communication for the wireless technology implemented in the piece of equipment.

According to an embodiment of the present disclosure, the producer's computers and mobile devices, third-party suppliers' computers and mobile devices, third-party service providers' computers and mobile devices, and computers associated with the producer's various pieces of equipment can include the appropriate user interfaces, monitors, displays or other associated equipment or software to enable a producer or their suppliers or their service providers to interact with the agricultural enterprise management software, database, and system.

Embodiments within the scope of the present disclosure include computer-implemented program products having machine-readable media for carrying or having machine-executable instructions or data structures stored thereon. Machine-readable media can be any available non-transitory media that can be accessed by a general purpose or special purpose computer or other machine with a processor.

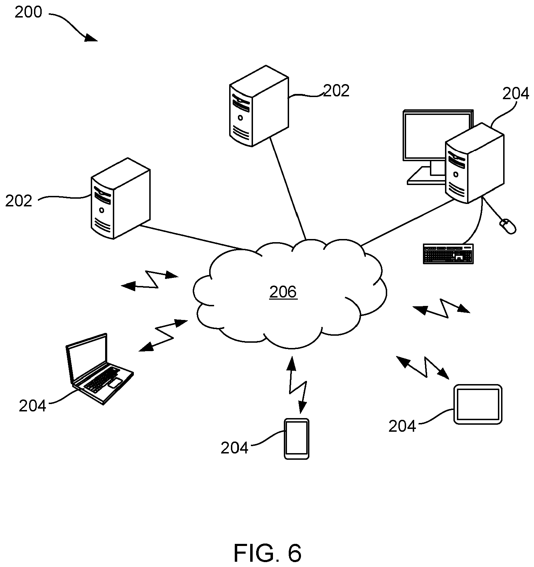

FIG. 6 is a schematic diagram showing a general structure of the agricultural enterprise management system 1 in the form of a computerized network system 200. The agricultural enterprise management 200 comprises one or more server computers 202. Depending on implementation, the server computer may be a server computing device, or alternatively, a general purpose computing device acting as a server computer while also being used by a user. The server computers 202 run one or more server programs.

The agricultural enterprise management 200 also comprises one or more client computing devices 204 such as desktop computers, laptop computers, tablets, smartphones, Personal Digital Assistants (PDAs) and the like. Each client computing device 204 runs one or more client application programs and for users to use. The one or more server computers 202 and the one or more client computing devices 204 are functionally interconnected by a network 206, such as the Internet, a local area network (LAN), a wide area network (WAN), or the like, via suitable wired and/or wireless networking connections.

Generally, each of the computing devices 202 and 204 is a general purpose computer or other suitable computing device comprising, for example, a processing unit, system memory (volatile and/or non-volatile memory), other non-removable or removable memory (for example, a hard disk drive, RAM, ROM, EPROM, EEPROM, CD-ROM, DVD, solid-state memory, flash memory, and/or the like), and a system bus coupling the various components to the processing unit. The computing device 202 or 204 also comprises networking capabilities using Ethernet, WI-FI^{®} (WI-FI is a registered trademark of Wi-Fi Alliance, Austin, TX, USA), and/or other suitable network format, to enable connection via the network 206 to one or more shared or remote drives, one or more networked computers, or other networked devices. The computing device 202 or 204 may use a computer mouse and a keyboard for receiving user input, and may use a display or monitor for displaying a graphic user interface (GUI) to the user. Alternatively, the client computing device 204 may use a touch-sensitive display for displaying a GUI and for receiving user input.

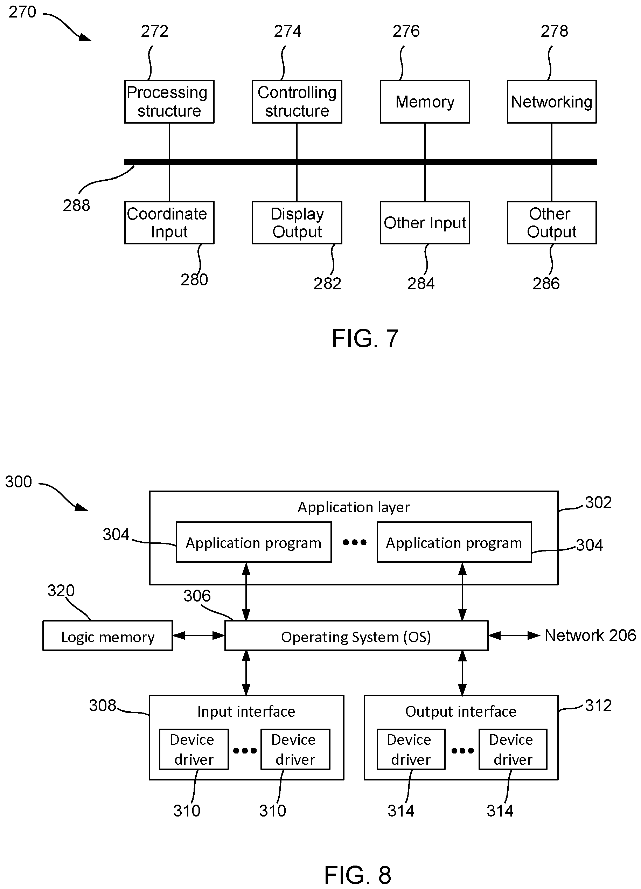

FIG. 7 shows a hardware structure 270 of a computing device 202/204. The computing device 202/204 comprises a processing structure 272, a controlling structure 274, memory 276 such as one or more storage devices, a networking interface 278, a coordinate input 280, a display output 282, and other input and output modules 284 and 286, all functionally interconnected by a system bus 288.

The processing structure 272 may be one or more single-core or multiple-core computing processors such as INTEL^{®} microprocessors (INTEL is a registered trademark of Intel Corp., Santa Clara, CA, USA), AMD^{®} microprocessors (AMD is a registered trademark of Advanced Micro Devices Inc., Sunnyvale, CA, USA), ARM^{®} microprocessors (ARM is a registered trademark of Arm Ltd., Cambridge, UK) manufactured by a variety of manufactures such as Qualcomm of San Diego, California, USA, under the ARM^{®} architecture, or the like.

The controlling structure 274 comprises a plurality of controllers such as graphic controllers, input/output chipsets, and the like, for coordinating operations of various hardware components and modules of the computing device 202/204.

The memory 276 comprises a plurality of memory units accessible by the processing structure 272 and the controlling structure 274 for reading and/or storing data such as input data and data generated by the processing structure 272 and/or the controlling structure 274. The memory 276 may be volatile and/or non-volatile, non-removable or removable memory such as RAM, ROM, EEPROM, solid-state memory, hard disks, CD, DVD, flash memory, and/or the like. In use, the memory 276 is generally divided to a plurality of portions for different use purposes. For example, a portion of the memory 276 (denoted herein as storage memory) may be used for long-term data storing, for example, storing files or databases. Another portion of the memory 276 may be used as the system memory for storing data during processing (denoted herein as working memory).

The networking interface 278 comprises one or more networking modules for connecting to other computing devices or networks via wired and/or wireless connections such as Ethernet, WI-FI^{®}, BLUETOOTH^{®}, ZIGBEE^{®} (ZIGBEE is a registered trademark of ZigBee Alliance Corp., San Ramon, CA, USA), 3G or 4G or 5G wireless mobile telecommunications technologies, and/or the like. In some embodiments, parallel ports, serial ports, USB connections, optical connections, or the like, may also be used for connecting other computing devices or networks although they are usually considered as input/output interfaces for connecting input/output devices.

The display output 282 comprises one or more display modules for displaying images, such as monitors, LCD displays, LED displays, projectors, and/or the like. The display output 282 may be a physically integrated part of the computing device 202/204 (for example, the display of a laptop computer or a tablet), or may be a display device physically separated from but functionally coupled to other components of the computing device 202/204 (for example, the monitor of a desktop computer).

The coordinate input 280 comprises one or more input modules for one or more users to input coordinate data. Examples of the coordinate input 280 include but are not limited to touch-sensitive screen, touch-sensitive whiteboard, trackball, computer mouse, touch-pad, other suitable human interface devices (HID), and the like. The coordinate input 280 may be a physically integrated part of the computing device 202/204 (for example, the touch-pad of a laptop computer or the touch-sensitive screen of a tablet), or may be a display device physically separated from but functionally coupled to other components of the computing device 202/204 (for example, a cordless computer mouse). The coordinate input 280 in some embodiments may be integrated with the display output 282 to form a touch-sensitive screen or touch-sensitive whiteboard.

The computing device 202/204 may also comprise other inputs 284 such as keyboards, microphones, scanners, and/or the like. The computing device 202/204 may further comprise other output 286 such as speakers, printers, and/or the like. In some embodiments, at least one client computing device 204 may also comprise a GPS component for determining the position thereof. In some alternative embodiments, at least one client computing device 204 is functionally coupled to an external GPS device for determining the position of the client computing device 204.

The system bus 288 interconnects various components 272 to 286 enabling them to transmit and receive data and control signals to/from each other.

FIG. 8 shows a simplified software architecture 300 of a computing device 202/204. The software architecture 300 comprises an application layer 302, an operating system 306, an input interface 308, an output interface 312, and a logic memory 320. The application layer 302 comprises one or more application programs 304 executed or run by the processing structure 272 for performing various jobs. The operating system 306 manages various hardware components of the computing device 202/204 via the input interface 308 and the output interface 312, manages logic memory 320, and manages and supports the application programs 304. The operating system 306 is also in communication with other computing devices (not shown) via the network 206 to allow application programs 304 to communicate with application programs running on other computing devices. As those skilled in the art will appreciate, the operating system 306 may be any suitable operating system such as Microsoft^{®} Windows^{®} (Microsoft and Windows are registered trademarks of Microsoft Corporation of Redmond, Washington, U.S.A.), Apple^{®} OS X^{®} (Apple and OS X are registered trademarks of Apple Inc. of Cupertino, California, U.S.A.), Apple^{®} iOS^{®} (iOS is a registered trademark of Cisco Systems, Inc. of San Jose, California, U.S.A.), Linux^{®} (Linux is a registered trademark of Linux Foundation of San Francisco, California, U.S.A.), Android^{®} (Android is a registered trademark of Google LLC of Mountain View, California, U.S.A.), or the like. The computing devices 202/204 of the agricultural enterprise management 200 may all have the same operating system, or may have different operating systems.

The input interface 308 comprises one or more input device interfaces 310 for communicating with respective input devices including the coordinate input 150, and the output interface 312 comprises one or more output device interfaces 314 managed by the operating system 306 for communicating with respective output devices including the display output 152. Input data received from the input devices via the input interface 308 is sent to the application layer 302, and is processed by one or more application programs 304. The output generated by the application programs 304 is sent to respective output devices via the output interface 312.

The logical memory 320 is a logical mapping of the physical memory 146 for facilitating access to the application programs 304. In this embodiment, the logical memory 320 comprises a storage memory area that is usually mapped to non-volatile physical memory, such as hard disks, solid state disks, flash drives, and the like, for generally long-term storing data therein, for example, storing the database 15 (see FIG. 1). The logical memory 320 also comprises a working memory area that is generally mapped to high-speed, and in some implementations volatile physical memory such as RAM, for application programs 304 to generally temporarily store data during program execution. For example, an application program 304 may load data from the storage memory area into the working memory area and may store data generated during its execution into the working memory area. The application program 304 may also store some data into the storage memory area as required or in response to a user's command.

In a server computer 202 or a client computing device when acting as a server 202, the application layer 302 generally comprises one or more server application programs 304 which provide server-side functions for managing network communication with client computing devices 204, and facilitating agricultural enterprise management.

In a client computing device 204, the application layer 302 generally comprises one or more client application programs 304 which provide client-side functions for communicating with the server application programs 304, displaying information and data on the GUI thereof, receiving user's instructions, and collaborating with the server application programs 304 for agricultural enterprise management.

It is important to note that the construction and arrangement of the system disclosed herein as shown in the various embodiments, is illustrative only. Certain features and embodiments have been shown and described in the present disclosure and many modifications and changes may occur to those skilled in the art, values of parameters, mounting arrangements, use of materials, orientations, and/or the like, without materially departing from the novel teachings and advantages of the subject matter recited in the claims. For example, elements shown as integrally formed may be constructed of multiple parts or elements, the position of elements may be reversed or otherwise varied, and the nature or number of discrete elements or positions may be altered or varied. The order or sequence of any process or method steps may be varied or re-sequenced according to alternative embodiments. Furthermore, in an effort to provide a concise description of the embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

### EXAMPLES

### Example 1. Selection of a crop for production during the next growing season.

Crop production planning typically commences during the winter approximately three to four months prior to spring sowing activities. Exemplary interactive steps that a producer may undertake with the agricultural enterprise management system disclosed herein include first preparing a historical report summarizing crop production on a selected field. The historical report may span 3 years (yrs), 5 yrs, 8 yrs, 10 yrs, 12 yrs, 15 yrs, 20 yrs and selected periods therebetween. The historical report may include some or all of the following parameters:
- type of crop including variety and seed treatment (if any);
- total crop yield goals and actualizations on an annual basis;
- cost of production, optionally broken out by cost of seed, cost of fertility inputs, cost of pesticide inputs, agronomic consulting and scouting costs, cost of fuel, labor costs for seeding, inputs applications, harvest, and the like;
- overhead management costs and capital depreciation;
- revenues generated from sales of each of the harvested crops and/or execution of financial positions on an annual basis; and
- net profits generated from each of the crops on an annual basis.

The historical report may optionally include market price data for other crop types that were not grown to enable "what if' analyses determine if an alternative crop had been produced and sold instead of the actual crop that was produced for one or more selected years in the historical report.

The present agricultural enterprise management system enables a producer to parse the historical data records that were input into his database modules during each crop production cycle for (i) agricultural production data; (ii) variable zone-based agronomic prescriptions; (iii) ag-chemical input records and costs for each annual cropping cycle; (vii) data pertaining to commodity demands, volumes delivered, and pricing; (ix) crop sales and ROI data; using (xiii) the plurality of algorithms for assimilating outputs from the above components into dashboard summaries of "key performance indicators" (KPIs); and (xiv) the farm data and service marketplace module wherein the sale, exchange, collection and connection of all farm data sets were input into, to produce the historical report. The historical data may be correlated with real-time feeds of world supply and commodity market pricing to assess the "next year" potential harvested value of each crop option. The producer would then be able to use (vii) a plurality of predictive modelling algorithms for performance of real-time "what if' analyses facilitate production management decisions to respond to global weather events and/or economic fluctuations, or to rank the ROI potential for each crop option being considered to enable a final decision on selection of a crop for production. After a crop has been selected for production, participating service providers directly involved with related work orders can be alerted on a scheduled basis to confirm delivery of selected products and services.

### Example 2. Estimation and sourcing of fertility inputs for production of a selected crop.

After a crop has been selected for production on a selected field, by a producer generally using the agricultural enterprise management system as outlined in Example 1, the agricultural enterprise management system enables a producer to use the (ii) module for variable zone-based agronomic prescriptions with the (iv) Agronomy Calculator module for processing of soil physicochemical data and/or satellite imagery to determine the types and amounts of fertility inputs that are required for optimal production of the selected crop. The producer may choose to source time-selected satellite imagery from a source that previously supplied such satellite images. Alternatively, the producer may choose to submit a tender to two or more providers of satellite imagery for the purposes of improving the quality of images delivered for use in the variable zone-based agronomic prescriptions module (ii) and the Agronomy Calculator module (iv) and/or to reduce the cost of the imagery. The producer may also choose to source soil sampling and physicochemical analyses from a previous supplier of such services or alternatively, submit a tender to two or more providers of soil testing services. It should be noted that the agricultural enterprise management system may be configured for the producer to give authorization to a selected provider of satellite imagery and/or a selected provider of soil testing and analyses services, to directly upload or transfer their data into the producer's databases.

After the satellite imagery and soil test results have been delivered and input into the variable zone-based agronomic prescriptions module (ii) and the Agronomy Calculator module (iv), the Agronomy Calculator (iv) is used to process and correlate the soil physicochemical data and satellite imagery to determine the types and quantities of soil fertility inputs required to produce the selected crop on the selected field and to input this data into the ag-chemical input records module (iii). This process is repeated for each of the producer's fields to determine the total volumes of fertility inputs required for the upcoming production season. Also included is the creation of an equipment data file on a field-by-field basis, which may be supplied to the producer via electronic transfer to the producer's equipment software and otherwise be made available for download using the system interface.

The producer can then request quotes from one or more suppliers of the fertility input products. If the producer wishes, they can provide authorization to the one or more suppliers to have limited access to the ag-chemical input records module (iii). The one or more suppliers may input their quotes into the ag-chemical input records module (iii). After the producer selects the supplier for the fertility inputs, the work order entry and tracking module (v) will then generate a work order itemizing the volumes and delivery dates for the individual fertility products ordered, and then will electronically deliver the work order to the supplier. The work order entry and tracking module (v) will then provide to the supplier reminders of delivery dates and confirmations of deliveries made, and based on electronic inputs and entries made during product delivery, and then during subsequent product withdrawal from storage and distribution onto the field, will monitor product inventories and generate inventory usage and storage reports. Alternatively, the supplier may integrate the fertility requirements data and other relevant datasets such has field and crop production data with their CRM programs (customer-relationship management).

### Example 3. Use of the Agronomy Calculator to create an agronomic prescription that uses one straight fertilizer product.

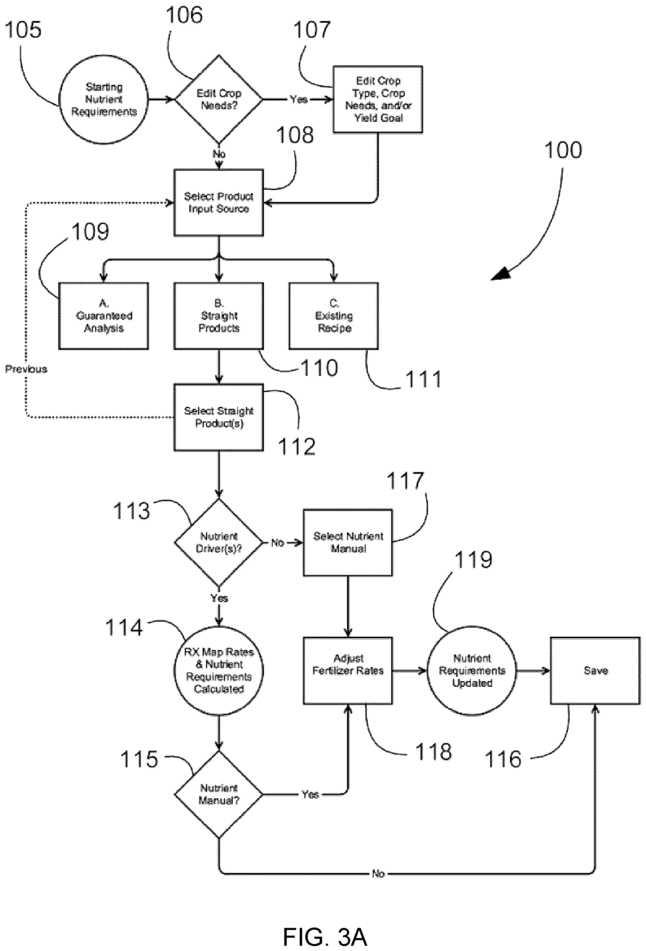

An agronomist may use an example of the Agronomy Calculator 100 to create an agronomic prescription for application of a straight fertilizer product to a selected crop on a selected field by generally following a process illustrated in FIG. 3A. First, the agronomist uses an interface control of the Agronomy Calculator to create a new agronomic prescription. Then, the agronomist may review for a producer's field location, the information input by the producer pertaining to the starting fertility information 105 for the field and the geospatial zones therein, the selected crop type and its related nutritional needs 107, and any edits to the crop needs 106 input by the producer. The agronomist then would enter the "select production input source" 108 and would select the "B. Straight Products" 110 option (other options available for selection at this step include "A. Guaranteed Analysis" 109 and "C. Existing Recipe" 111). For each nutrient, the agronomist can select a straight fertilizer product from a menu of available straight fertilizer product choices. In this example, the agronomist choses the straight fertilizer product "11-52-0" from the products menu for the nutrient phosphorus (P). From the P "Function" menu, the agronomist would then select "Driver" 113, as it is desirable that the P component (52, in the case of 11-52-0) of the selected fertilizer product drives the overall fertilizer rates (in accordance with the starting requirements). The fertilizer rates are then automatically updated 114, based on the definitions supplied by producer in the previous step (i.e., selection of the crop type, yield goal, crop needs, and field location). At the same time, the nutrient requirements associated with the crop needs are automatically updated 114. If the agronomist is satisfied with the agronomic prescription generated by the calculations 114 (i.e., the fertilizer rates calculated to satisfy the calculated nutrient requirements), they would proceed by selecting "Save" 116 to save the agronomic prescription. However, if the agronomist was not satisfied with the agronomic prescription generated by the Agronomy Calculator, they would proceed by manually adjusting the fertilizer rates 118, after which, the Agronomy Calculator would recalculate the fertilizer rates and nutrient requirements 119, and then the agronomist would click "Save" 116 to save the agronomic prescription. On the other hand, if the agronomist wishes to manually specify the rate of a selected straight fertilizer product, at the P "Function" driver step 113, they would select "Nutrient Manual" 117, then manually set the fertilizer rates 118, after which, the Agronomy Calculator would recalculate nutrient requirements 119, and then the agronomist would click "Save" 116 to save the agronomic prescription.

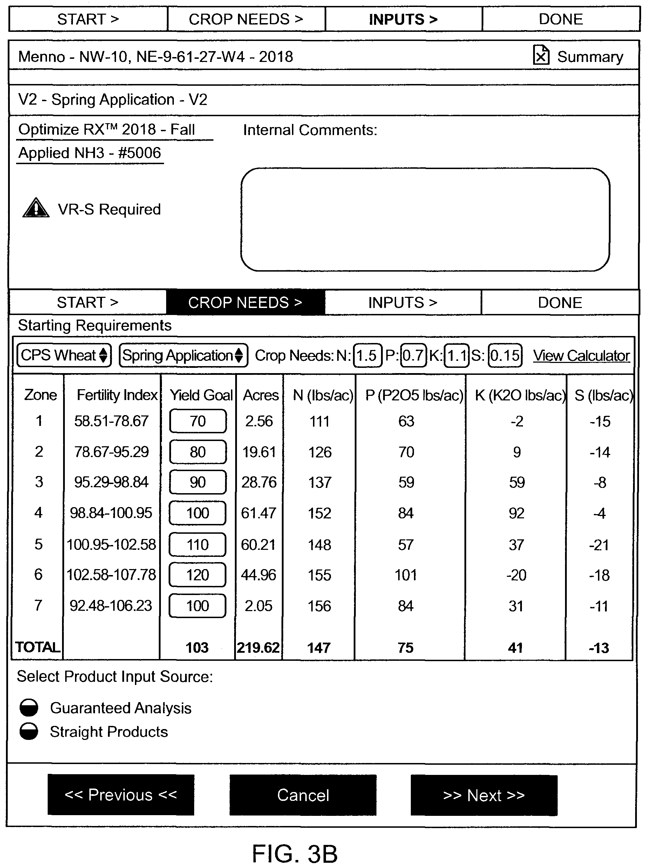

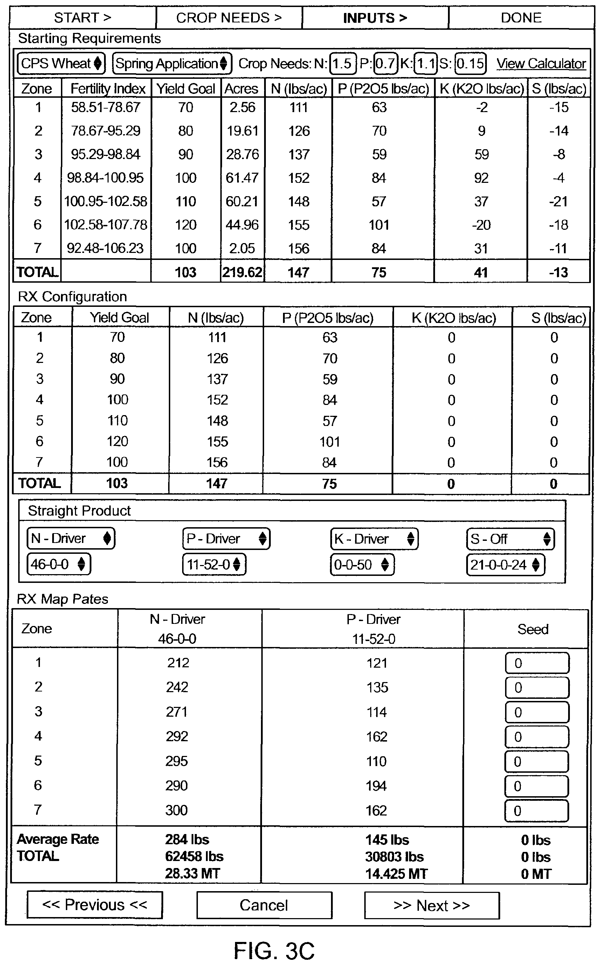

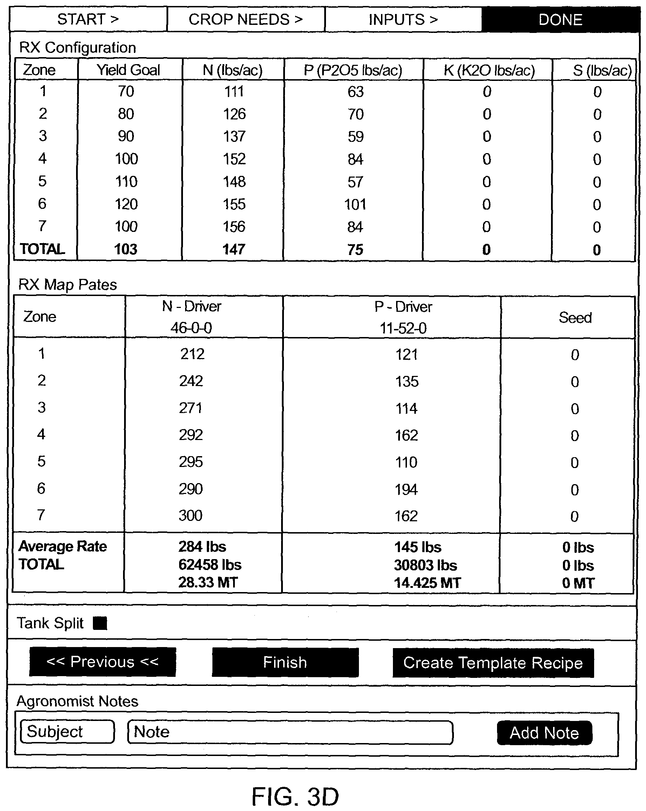

FIGs. 3B to 3C are screenshots showing some steps of the Agronomy Calculator method described in this example. As shown in FIG. 3B, a user may create a new agronomic prescription for a field having seven (7) geospatial zones. The user may select a crop such as "CPS wheat" and an application season such as "spring Application". Then, the user may input the crop needs in terms of the nutrients nitrogen (N), phosphorus (P), potassium (K), and Sulphur (S). The user may also input a yield goal for each geospatial zone. As shown in FIG. 3C, the user may choose a driver product for one or more nutrients and start the calculation. The calculation result is shown in FIG. 3D.

### Example 4. Use of the Agronomy Calculator to create an agronomic prescription that uses one guaranteed analysis.

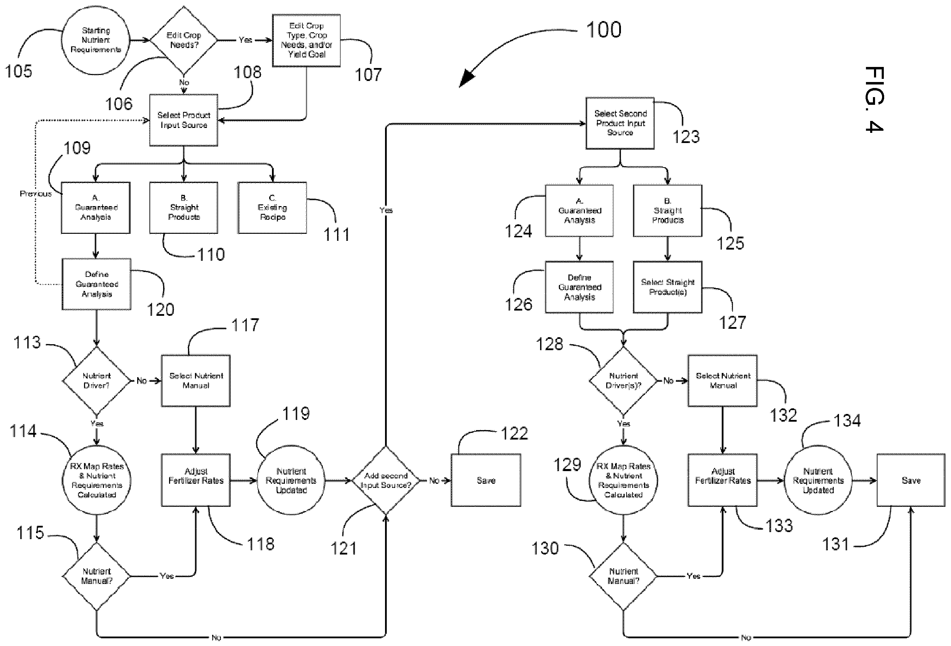

An agronomist may use an example of the Agronomy Calculator 100 to create an agronomic prescription based on a guaranteed analysis for delivery of a blended fertilizer product to a selected crop on a selected field by generally following a process illustrated in FIG. 4. First, the agronomist uses an interface control of the Agronomy Calculator to create a new agronomic prescription. Then, the agronomist may review for a producer's field location, the information input by the producer pertaining to the starting fertility information 105 for the field and the geospatial zones therein, the selected crop type and related nutritional needs 107, and any edits to the crop needs 106 input by the producer. The agronomist then would enter the "select production input source" 108 and would select the "A. Guaranteed Analysis" 109 option. For each nutrient (such as N, P, and K), the agronomist would then enter a blend ratio 120. It should be noted that blend ratios are based on combinations of straight N fertilizer products and/or straight P fertilizer products and/or straight K fertilizer products. The agronomist may optionally select at this step to include in the guaranteed analysis 120, one or more micronutrients or alternatively a blend of micronutrients. In this example, the agronomist selects from the N "Function" menu in the nitrogen column "N", "Driver" 113, as it is desirable that the N component of the previously defined guaranteed analysis drives calculation of the overall fertilizer rates 114 based on the definitions supplied by producer in the previous step (i.e., selection of the crop type, yield goal, crop needs, and field location). At the same time, the nutrient requirements associated with the crop needs are automatically updated 114. If the agronomist is satisfied with the agronomic prescription generated by the calculations 114 (i.e., the fertilizer rates calculated to satisfy the calculated nutrient requirements), they would proceed by selecting "Save" 122 to save the agronomic prescription. However, if the agronomist is not satisfied with the agronomic prescription generated by the Agronomy Calculator, they would select "Nutrient Manual?" 117 and manually adjust the fertilizer rates 118, after which, the Agronomy Calculator would recalculate nutrient requirements 119, after which, the agronomist would "Save" 122 the agronomic prescription.

The Agronomist has the option to add a second input source 123 for the prescription being prepared by selecting "Add second input source" 121. For example, the second input source may be an "A. Guaranteed Analysis" 124 option or a "B. Straight Products" 125 option. If the agronomist chooses the "A. Guaranteed Analysis" 124 option, they would then specify the components and their ratios in the "Define Guaranteed Analysis" input 126, and then proceed by selecting from the N "Function" menu in the nitrogen column "N", "Driver" 128, as it is desirable that the N component of the previously defined guaranteed analysis drives calculation of the overall fertilizer rates 129 based on the definitions supplied by producer in their selection of the crop type, yield goal, crop needs, and field location at the start of the agronomic prescription development (items 105, 106, 107). If the agronomist is satisfied with the agronomic prescription generated by the calculations 129 (i.e., the fertilizer rates calculated to satisfy the calculated nutrient requirements), they would proceed to "Save" 131 the agronomic prescription. However, if the agronomist was not satisfied with the agronomic prescription generated by the Agronomy Calculator, they would select "Nutrient Manual?" query 130 and manually adjust the fertilizer rates 133, after which, the Agronomy Calculator would recalculate the fertilizer rates and nutrient requirements 134, after which, the agronomist would "Save" 131 the agronomic prescription.

### Example 5. Use of the Agronomy Calculator to create an agronomic prescription that uses an existing nutrient recipe.

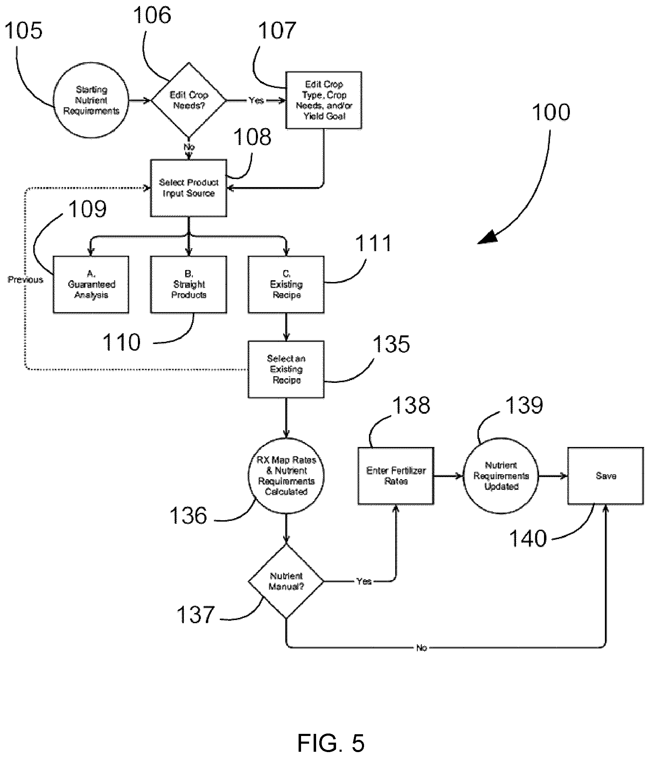

This example is based on the premise that the agronomist has previously created at least one agronomic prescription for the producer, and has selected for creation of a new agronomic prescription, a specified field in the producer's database for which have been previously entered (i) a crop plan that includes at least a crop type, the number of farmable acres, and the crop yield goal, and (ii) soil test results. In this example, as illustrated in FIG. 5, the first step is for the agronomist to use the interface control of the Agronomy Calculator 100 to create a new agronomic prescription. The agronomist then reviews the producer's predefined crop type, crop needs, and the crop yield goal 107 for the field and soil management zones therein, and updates as needed for the starting nutrient requirements 105 and crop needs 106 based on the most recent soil test results. The agronomist then would enter the "select production input source" 108 and select the "C. Existing Recipe" 111 option, and then would choose an existing recipe 135.

The fertilizer rates are then automatically updated 136, based on the definitions supplied by producer in the previous step (i.e., 107) and the agronomist (i.e., 105, 106, and 108). At the same time, the nutrient requirements associated with the crop needs are automatically updated 136. If the agronomist is satisfied with the agronomic prescription generated by the calculations 136 (i.e., the fertilizer rates calculated to satisfy the calculated nutrient requirements), they would proceed by selecting "Save" 140 to save the agronomic prescription. However, if the agronomist was not satisfied with the agronomic prescription generated by the Agronomy Calculator at 136, they would select "Nutrient Manual?" query 137 and manually adjust the fertilizer rates 138, after which, the Agronomy Calculator would recalculate the fertilizer rates and nutrient requirements 139, after which, the agronomist would click "Save" 140 to save the agronomic prescription.

Although embodiments have been described above with reference to the accompanying drawings, those of skill in the art will appreciate that variations and modifications may be made without departing from the scope of the invention as defined by the appended claims.

## Claims

1. A computer-implemented method for optimal production of a selected crop to be grown on a field having one or more geospatial zones, the method comprising:
collecting and storing a set of parameters of the one or more geospatial zones;
automatically producing a set of nutrient requirements of one or more nutrients;
obtaining a fertilizer product set comprising one or more fertilizer products for applying to the one or more geospatial zones; and
determining a first agronomic prescription for applying the fertilizer product set to the one or more geospatial zones at a fertilizer rate for growing the selected crop;
wherein the computer-implemented method is **characterized in that**:
said collecting and storing a set of parameters comprises:
collecting and storing into one or more cloud-based databases (15) the set of parameters comprising at least soil testing data, predefined agronomic crop needs, and yield goals of the one or more geospatial zones;
said automatically producing the set of nutrient requirements of the one or more nutrients comprises:
collecting and storing into the one or more cloud-based databases (15) satellite imagery of the one or more geospatial zones,
automatically obtaining geospatial zone delineation of the one or more geospatial zones from the satellite imagery, and
automatically producing the set of nutrient requirements of the one or more nutrients at least based on the soil testing data, the geospatial zone delineation, the predefined agronomic crop needs, and the yield goals; and
the computer-implemented method further comprises:
receiving a first user input indicating a first fertilizer product from the fertilizer product set as a driver fertilizer product, and
calculating the fertilizer rate of the fertilizer product set based on the driver fertilizer product and the set of nutrient requirements.

2. The computer-implemented method of claim 1, wherein the one or more nutrients comprises at least one of nitrogen (N), phosphorus (P), and potassium (K).

3. The computer-implemented method of claim 1 or 2, wherein the set of nutrient requirements comprises one or more micronutrients.

4. The computer-implemented method of any one of claims 1 to 3, wherein said calculating the fertilizer rate of the fertilizer product set based on the driver fertilizer product and the set of nutrient requirements further comprises:
automatically updating the set of nutrient requirements based on said calculation of fertilizer rate of the fertilizer product set.

5. The computer-implemented method of any one of claims 1 to 4, wherein said calculating the fertilizer rate of the fertilizer product set based on the driver fertilizer product and the set of nutrient requirements further comprises:
receiving an adjustment from the user;
adjusting the calculated fertilizer rate of the fertilizer product set using the received adjustment; and
automatically re-updating the set of nutrient requirements.

6. The computer-implemented method of any one of claims 1 to 5, wherein said calculating the fertilizer rate of the fertilizer product set based on the driver fertilizer product and the set of nutrient requirements further comprises:
receiving from the user a rate for one of the fertilizer product set;
setting the received rate as the fertilizer rate of the fertilizer product set; and
automatically re-updating the set of nutrient requirements.

7. The computer-implemented method of any one of claims 1 to 6, wherein said obtaining the fertilizer product set for applying to the one or more geospatial zones comprises:
receiving a second user input indicating at least one user-selected fertilizer product for at least one of the one or more nutrients; and
including the at least one user-selected fertilizer product into the fertilizer product set.

8. The computer-implemented method of any one of claims 1 to 6, wherein said obtaining the fertilizer product set for applying to the one or more geospatial zones comprises:
receiving a third user input indicating a plurality of user-selected fertilizer products to be blended at a user- selected blend ratio; and
including the blended plurality of user-selected fertilizer products into the fertilizer product set.

9. The computer-implemented method of claim 8 further comprising:
receiving a fourth user input indicating a second fertilizer product from the fertilizer product set as the driver fertilizer product; and
repeating said calculating the fertilizer rate of the fertilizer product set based on the driver fertilizer product and the set of nutrient requirements.

10. The computer-implemented method of any one of claims 1 to 6, wherein said obtaining the fertilizer product set for applying to the one or more geospatial zones comprises obtaining the fertilizer product set from a second agronomic prescription; and
wherein said calculating the fertilizer rate of the fertilizer product set comprises obtaining the fertilizer product set from the second agronomic prescription.

11. The computer-implemented method of any one of claims 1 to 10 further comprising:
saving the first agronomic prescription in the one or more cloud-based databases (15).

12. The computer-implemented method of any one of claims 1 to 11 further comprising:
providing a workflow interface for accessing and modifying the first agronomic prescription.

13. The computer-implemented method of claim 12, wherein said providing the workflow interface for accessing and modifying the first agronomic prescription comprises:
providing a workflow interface for re-obtaining the fertilizer product set comprising one or more fertilizer products for applying to the one or more geospatial zones.

14. A computer system (1) for optimal production of a selected crop to be grown on a field having one or more geospatial zones, the computer system (1) comprising:
a memory (276);
one or more cloud-based databases (15);
a network or a communication connection (206); and
a processor (272) for communication with the memory (276), the one or more cloud-based databases (15), and the network or the communication connection (206);
wherein the processor, the memory, the one or more cloud based databases, and the network or the communication connection form a single computerized platform, and
wherein the processor (272) is configured to perform steps of:
collecting and storing a set of parameters of the one or more geospatial zones;
automatically producing a set of nutrient requirements of one or more nutrients;
obtaining a fertilizer product set comprising one or more fertilizer products for applying to the one or more geospatial zones; and
determining a first agronomic prescription for applying the fertilizer product set to the one or more geospatial zones at a fertilizer rate for growing the selected crop;
wherein the computer system (1) is **characterized in that**:
said collecting and storing a set of parameters comprises:
collecting and storing into one or more cloud-based databases (15) the set of parameters comprising at least soil testing data, predefined agronomic crop needs, and yield goals of the one or more geospatial zones;
said automatically producing the set of nutrient requirements of the one or more nutrients comprises:
collecting and storing into the one or more cloud-based databases (15) satellite imagery of the one or more geospatial zones,
automatically obtaining geospatial zone delineation of the one or more geospatial zones from the satellite imagery, and
automatically producing the set of nutrient requirements of the one or more nutrients at least based on the soil testing data, the geospatial zone delineation, the predefined agronomic crop needs, and the yield goals; and
the processor (272) is further configured to perform steps of:
receiving a first user input indicating a first fertilizer product from the fertilizer product set as a driver fertilizer product, and
calculating the fertilizer rate of the fertilizer product set based on the driver fertilizer product and the set of nutrient requirements.

15. The computer system of claim 14, wherein the one or more nutrients comprises at least one of nitrogen (N), phosphorus (P), and potassium (K).

16. The computer system of claim 14 or 15, wherein the set of nutrient requirements comprises requirements of one or more micronutrients.

17. The computer system of any one of claims 14 to 16, wherein said calculating the fertilizer rate of the fertilizer product set based on the driver fertilizer product and the set of nutrient requirements further comprises:
automatically updating the set of nutrient requirements based on said calculation of fertilizer rate of the fertilizer product set.

18. The computer system of any one of claims 14 to 17, wherein said calculating the fertilizer rate of the fertilizer product set based on the driver fertilizer product and the set of nutrient requirements further comprises:
receiving an adjustment from the user;
adjusting the calculated fertilizer rate of the fertilizer product set using the received adjustment; and
automatically re-updating the set of nutrient requirements.

19. The computer system of any one of claims 14 to 18, wherein said calculating the fertilizer rate of the fertilizer product set based on the driver fertilizer product and the set of nutrient requirements further comprises:
receiving from the user a rate for one of the fertilizer product set;
setting the received rate as the fertilizer rate of the fertilizer product set; and
automatically re-updating the set of nutrient requirements.

20. The computer system of any one of claims 14 to 19, wherein said obtaining the fertilizer product set for applying to the one or more geospatial zones comprises:
receiving a second user input indicating at least one user-selected fertilizer product for at least one of the one or more nutrients; and
including the at least one user-selected fertilizer product into the fertilizer product set.

21. The computer system of any one of claims 14 to 19, wherein said obtaining the fertilizer product set for applying to the one or more geospatial zones comprises:
receiving a third user input indicating a plurality of user-selected fertilizer products to be blended at a user- selected blend ratio; and
including the blended plurality of user-selected fertilizer products into the fertilizer product set.

22. The computer system of claim 21, wherein the processor (272) is further configured for:
receiving a fourth user input indicating a second fertilizer product from the fertilizer product set as the driver fertilizer product; and
repeating said calculating the fertilizer rate of the fertilizer product set based on the driver fertilizer product and the set of nutrient requirements.

23. The computer system of any one of claims 14 to 19, wherein said obtaining the fertilizer product set for applying to the one or more geospatial zones comprises obtaining the fertilizer product set from a second agronomic prescription; and
wherein said calculating the fertilizer rate of the fertilizer product set comprises obtaining the fertilizer product set from the second agronomic prescription.

24. The computer system of any one of claims 14 to 23, wherein the processor (272) is further configured for:
saving the first agronomic prescription in the one or more cloud-based databases (15).

25. The computer system of any one of claims 14 to 24, wherein the processor (272) is further configured for:
providing a workflow interface for accessing and modifying the first agronomic prescription.

26. The computer system of claim 25, wherein said providing the workflow interface for accessing and modifying the first agronomic prescription comprises:
providing a workflow interface for re-obtaining the fertilizer product set comprising one or more fertilizer products for applying to the one or more geospatial zones.

27. A computer-readable storage device comprising computer-executable instructions for optimal production of a selected crop to be grown on a field having one or more geospatial zones, wherein the instructions, when loaded into a memory (276) of a single computerized platform and executed, cause a processor (272) to perform actions comprising:
collecting and storing a set of parameters of the one or more geospatial zones;
automatically producing a set of nutrient requirements of one or more nutrients;
obtaining a fertilizer product set comprising one or more fertilizer products for applying to the one or more geospatial zones; and
determining a first agronomic prescription for applying the fertilizer product set to the one or more geospatial zones at a fertilizer rate for growing the selected crop;
wherein the computer-readable storage device is **characterized in that**:
said collecting and storing a set of parameters comprises:
collecting and storing into one or more cloud-based databases (15) the set of parameters comprising at least soil testing data, predefined agronomic crop needs, and yield goals of the one or more geospatial zones;
said automatically producing the set of nutrient requirements of the one or more nutrients comprises:
collecting and storing into the one or more cloud-based databases (15) satellite imagery of the one or more geospatial zones,
automatically obtaining geospatial zone delineation of the one or more geospatial zones from the satellite imagery, and
automatically producing the set of nutrient requirements of the one or more nutrients at least based on the soil testing data, the geospatial zone delineation, the predefined agronomic crop needs, and the yield goals; and
the instructions, when loaded into the memory (276) of the single computerized platform and executed, further cause the processor (272) to perform actions comprising:
receiving a first user input indicating a first fertilizer product from the fertilizer product set as a driver fertilizer product, and
calculating the fertilizer rate of the fertilizer product set based on the driver fertilizer product and the set of nutrient requirements.

28. The computer-readable storage device of claim 27, wherein the one or more nutrients comprises at least one of nitrogen (N), phosphorus (P), and potassium (K).

29. The computer-readable storage device of claim 27 or 28, wherein the set of nutrient requirements comprises requirements of one or more micronutrients.

30. The computer-readable storage device of any one of claims 27 to 29, wherein said calculating the fertilizer rate of the fertilizer product set based on the driver fertilizer product and the set of nutrient requirements further comprises:
automatically updating the set of nutrient requirements based on said calculation of fertilizer rate of the fertilizer product set.

31. The computer-readable storage device of any one of claims 27 to 30, wherein said calculating the fertilizer rate of the fertilizer product set based on the driver fertilizer product and the set of nutrient requirements further comprises:
receiving an adjustment from the user;
adjusting the calculated fertilizer rate of the fertilizer product set using the received adjustment; and
automatically re-updating the set of nutrient requirements.

32. The computer-readable storage device of any one of claims 27 to 31, wherein said calculating the fertilizer rate of the fertilizer product set based on the driver fertilizer product and the set of nutrient requirements further comprises:
receiving from the user a rate for one of the fertilizer product set;
setting the received rate as the fertilizer rate of the fertilizer product set; and
automatically re-updating the set of nutrient requirements.

33. The computer-readable storage device of any one of claims 27 to 32, wherein said obtaining the fertilizer product set for applying to the one or more geospatial zones comprises:
receiving a second user input indicating at least one user-selected fertilizer product for at least one of the one or more nutrients; and
including the at least one user-selected fertilizer product into the fertilizer product set.

34. The computer-readable storage device of any one of claims 27 to 32, wherein said obtaining the fertilizer product set for applying to the one or more geospatial zones comprises:
receiving a third user input indicating a plurality of user-selected fertilizer products to be blended at a user- selected blend ratio; and
including the blended plurality of user-selected fertilizer products into the fertilizer product set.

35. The computer-readable storage device of claim 34, wherein the instructions, when loaded into the memory (276) of the single computerized platform and executed, further cause the processor (272) to perform actions comprising:
receiving a fourth user input indicating a second fertilizer product from the fertilizer product set as the driver fertilizer product; and
repeating said calculating the fertilizer rate of the fertilizer product set based on the driver fertilizer product and the set of nutrient requirements.

36. The computer-readable storage device of any one of claims 27 to 32, wherein said obtaining the fertilizer product set for applying to the one or more geospatial zones comprises obtaining the fertilizer product set from a second agronomic prescription; and
wherein said calculating the fertilizer rate of the fertilizer product set comprises obtaining the fertilizer product set from the second agronomic prescription.

37. The computer-readable storage device of any one of claims 27 to 36, wherein the instructions, when loaded into the memory (276) of the single computerized platform and executed, further cause the processor (272) to perform actions comprising:
saving the first agronomic prescription in the one or more cloud-based databases (15).

38. The computer-readable storage device of any one of claims 27 to 37, wherein the instructions, when loaded into the memory (276) of the single computerized platform and executed, further cause the processor (272) to perform actions comprising:
providing a workflow interface for accessing and modifying the first agronomic prescription.

39. The computer-readable storage device of claim 38, wherein said providing the workflow interface for accessing and modifying the first agronomic prescription comprises:
providing a workflow interface for re-obtaining the fertilizer product set comprising one or more fertilizer products for applying to the one or more geospatial zones.

## Patentansprüche

1. Computerimplementiertes Verfahren zur optimalen Produktion einer ausgewählten Nutzpflanze, die auf einem Feld mit einer oder mehreren raumbezogenen Zonen angebaut werden soll, das Verfahren umfasst:
Sammeln und Speichern eines Satzes von Parametern der einen oder mehreren raumbezogenen Zonen;
automatisches Erzeugen eines Satzes von Nährstoffanforderungen für einen oder mehrere Nährstoffe;
Erhalten eines Düngemittelproduktsatzes, der ein oder mehrere Düngemittelprodukte zum Ausbringen auf die eine oder mehreren raumbezogenen Zonen umfasst; und
Bestimmen einer ersten agronomischen Vorschrift zum Ausbringen des Düngemittelproduktsatzes auf die eine oder mehreren raumbezogenen Zonen mit einer Düngemittelrate zum Anbau der ausgewählten Nutzpflanze;
wobei das computerimplementierte Verfahren **dadurch gekennzeichnet ist, dass**:
das Sammeln und Speichern eines Satzes von Parametern umfasst:
das Sammeln und Speichern eines Satzes von Parametern mit wenigstens Bodenuntersuchungsdaten, vordefinierten agronomischen Nutzpflanzenbedürfnissen und Ertragszielen der einen oder mehreren raumbezogenen Zonen in einer oder mehreren cloudbasierten Datenbanken (15);
das automatische Erzeugen des Satzes von Nährstoffanforderungen des einen oder der mehreren Nährstoffe umfasst:
das Sammeln und Speichern von Satellitenbildern der einen oder mehreren raumbezogenen Zonen in der einen oder den mehreren cloudbasierten Datenbanken (15),
automatisches Erhalten einer raumbezogenen Zonenabgrenzung der einen oder mehreren raumbezogenen Zonen aus den Satellitenbildern, und
automatisches Erzeugen des Satzes von Nährstoffanforderungen des einen oder der mehreren Nährstoffe wenigstens basierend auf den Bodenuntersuchungsdaten, der raumbezogenen Zonenabgrenzung, den vordefinierten agronomischen Nutzpflanzenbedürfnissen und den Ertragszielen; und
das computerimplementierte Verfahren ferner umfasst:
Empfangen einer ersten Benutzereingabe, die ein erstes Düngemittelprodukt aus dem Düngemittelproduktsatz als ein Treiberdüngemittelprodukt angibt, und
Berechnen der Düngemittelrate des Düngemittelproduktsatzes basierend auf dem Treiberdüngemittelprodukt und dem Satz von Nährstoffanforderungen.

2. Computerimplementiertes Verfahren nach Anspruch 1, wobei der eine oder die mehreren Nährstoffe wenigstens Stickstoff (N), Phosphor (P) oder Kalium (K) umfassen.

3. Computerimplementiertes Verfahren nach Anspruch 1 oder 2, wobei der Satz von Nährstoffanforderungen einen oder mehrere Mikronährstoffe umfasst.

4. Computerimplementiertes Verfahren nach einem der Ansprüche 1 bis 3, wobei das Berechnen der Düngemittelrate des Düngemittelproduktsatzes basierend auf dem Treiberdüngemittelprodukt und dem Satz von Nährstoffanforderungen ferner umfasst:
automatisches Aktualisieren des Satzes der Nährstoffanforderungen basierend auf der Berechnung der Düngemittelrate des Düngemittelproduktsatzes.

5. Computerimplementiertes Verfahren nach einem der Ansprüche 1 bis 4, wobei das Berechnen der Düngemittelrate des Düngemittelproduktsatzes basierend auf dem Treiberdüngemittelprodukt und dem Satz von Nährstoffanforderungen ferner umfasst:
das Empfangen einer Anpassung von dem Benutzer;
das Anpassen der berechneten Düngemittelrate des Düngemittelproduktsatzes unter Verwendung der empfangenen Anpassung; und
automatisches erneutes Aktualisieren des Satzes von Nährstoffanforderungen.

6. Computerimplementiertes Verfahren nach einem der Ansprüche 1 bis 5, wobei das Berechnen der Düngemittelrate des Düngemittelproduktsatzes basierend auf dem Treiberdüngemittelprodukt und dem Satz von Nährstoffanforderungen ferner umfasst:
Empfangen einer Rate für eines der Düngemittelprodukte aus dem Düngemittelproduktsatz von dem Benutzer;
Einstellen der empfangenen Rate als die Düngemittelrate des Düngemittelproduktsatzes; und
automatisches erneutes Aktualisieren des Satzes von Nährstoffanforderungen.

7. Computerimplementiertes Verfahren nach einem der Ansprüche 1 bis 6, wobei das Erhalten des Düngemittelproduktsatzes zum Ausbringen auf die eine oder mehreren raumbezogenen Zonen umfasst:
Empfangen einer zweiten Benutzereingabe, die wenigstens ein benutzerausgewähltes Düngemittelprodukt für wenigstens einen des einen oder der mehreren Nährstoffe angibt; und
Hinzufügen des wenigstens einen benutzerausgewählten Düngemittelprodukts in den Düngemittelproduktsatz.

8. Computerimplementiertes Verfahren nach einem der Ansprüche 1 bis 6, wobei das Erhalten des Düngemittelproduktsatzes zum Ausbringen auf die eine oder mehreren raumbezogenen Zonen umfasst:
Empfangen einer dritten Benutzereingabe, die eine Vielzahl von benutzerausgewählten Düngemittelprodukten angibt, die in einem benutzerausgewählten Mischungsverhältnis gemischt werden sollen; und
Hinzufügen der gemischten Vielzahl von benutzerausgewählten Düngemittelprodukten zu dem Düngemittelproduktsatz.

9. Computerimplementiertes Verfahren nach Anspruch 8, das ferner umfasst:
Empfangen einer vierten Benutzereingabe, die ein zweites Düngemittelprodukt aus dem Düngemittelproduktsatz als das Treiberdüngemittelprodukt angibt; und
Wiederholen des Berechnens der Düngemittelrate des Düngemittelproduktsatzes basierend auf dem Treiberdüngemittelprodukt und dem Satz von Nährstoffanforderungen.

10. Computerimplementiertes Verfahren nach einem der Ansprüche 1 bis 6, wobei das Erhalten des Düngemittelproduktsatzes zum Ausbringen auf die eine oder mehreren raumbezogenen Zonen das Erhalten des Düngemittelproduktsatzes aus einer zweiten agronomischen Vorschrift umfasst; und
wobei das Berechnen der Düngemittelrate des Düngemittelproduktsatzes das Erhalten des Düngemittelproduktsatzes aus der zweiten agronomischen Vorschrift umfasst.

11. Computerimplementiertes Verfahren nach einem der Ansprüche 1 bis 10, ferner umfassend:
Speichern der ersten agronomischen Vorschrift in der einen oder den mehreren cloudbasierten Datenbanken (15).

12. Computerimplementiertes Verfahren nach einem der Ansprüche 1 bis 11, ferner umfassend:
Bereitstellen einer Arbeitsablaufschnittstelle zum Zugreifen auf und Modifizieren der ersten agronomischen Vorschrift.

13. Computerimplementiertes Verfahren nach Anspruch 12, wobei das Bereitstellen der Arbeitsablaufschnittstelle zum Zugreifen auf und Modifizieren der ersten agronomischen Vorschrift umfasst:
Bereitstellen einer Arbeitsablaufschnittstelle zum erneuten Erhalten des Düngemittelproduktsatzes, der ein oder mehrere Düngemittelprodukte zum Ausbringen auf die eine oder mehreren raumbezogenen Zonen umfasst.

14. Computersystem (1) zur optimalen Produktion einer ausgewählten Nutzpflanze, die auf einem Feld mit einer oder mehreren raumbezogenen Zonen angebaut werden soll, wobei das Computersystem (1) umfasst:
einen Speicher (276);
eine oder mehrere cloudbasierte Datenbanken (15);
ein Netzwerk oder eine Kommunikationsverbindung (206); und
einen Prozessor (272) zur Kommunikation mit dem Speicher (276), der einen oder den mehreren cloudbasierten Datenbanken (15) und dem Netzwerk oder der Kommunikationsverbindung (206);
wobei der Prozessor, der Speicher, die eine oder mehreren cloudbasierten Datenbanken und das Netzwerk oder die Kommunikationsverbindung eine einzige computerisierte Plattform bilden; und
wobei der Prozessor (272) dazu eingerichtet ist, die nachstehenden Schritte durchzuführen:
Sammeln und Speichern eines Satzes von Parametern der einen oder mehreren raumbezogenen Zonen;
automatisches Erzeugen eines Satzes von Nährstoffanforderungen für einen oder mehrere Nährstoffe;
Erhalten eines Düngemittelproduktsatzes, der ein oder mehrere Düngemittelprodukte zum Ausbringen auf die eine oder mehreren raumbezogenen Zonen umfasst; und
Bestimmen einer ersten agronomischen Vorschrift zum Ausbringen des Düngemittelproduktsatzes auf die eine oder mehreren raumbezogenen Zonen mit einer Düngemittelrate zum Anbau der ausgewählten Nutzpflanze;
wobei das Computersystem (1) **dadurch gekennzeichnet ist, dass**:
das Sammeln und Speichern eines Satzes von Parametern umfasst:
das Sammeln und Speichern eines Satzes von Parametern mit wenigstens Bodenuntersuchungsdaten, vordefinierten agronomischen Nutzpflanzenbedürfnissen und Ertragszielen der einen oder mehreren raumbezogenen Zonen in einer oder mehreren cloudbasierten Datenbanken (15);
das automatische Erzeugen des Satzes von Nährstoffanforderungen des einen oder der mehreren Nährstoffe umfasst:
das Sammeln und Speichern von Satellitenbildern der einen oder mehreren raumbezogenen Zonen in einer oder mehreren cloudbasierten Datenbanken (15),
automatisches Erhalten einer raumbezogenen Zonenabgrenzung der einen oder mehreren raumbezogenen Zonen aus den Satellitenbildern, und
automatisches Erzeugen des Satzes von Nährstoffanforderungen des einen oder der mehreren Nährstoffe wenigstens basierend auf den Bodenuntersuchungsdaten, der raumbezogenen Zonenabgrenzung, den vordefinierten agronomischen Nutzpflanzenbedürfnissen und den Ertragszielen; und
der Prozessor (272) ferner dazu eingerichtet ist, die nachstehenden Schritte durchzuführen:
Empfangen einer ersten Benutzereingabe, die ein erstes Düngemittelprodukt aus dem Düngemittelproduktsatz als ein Treiberdüngemittelprodukt angibt, und
Berechnen der Düngemittelrate des Düngemittelproduktsatzes basierend auf dem Treiberdüngemittelprodukt und dem Satz von Nährstoffanforderungen.

15. Computersystem nach Anspruch 14, wobei der eine oder die mehreren Nährstoffe wenigstens Stickstoff (N), Phosphor (P) oder Kalium (K) umfassen.

16. Computersystem nach Anspruch 14 oder 15, wobei der Satz von Nährstoffanforderungen einen oder mehrere Mikronährstoffe umfasst.

17. Computersystem nach einem der Ansprüche 14 bis 16, wobei das Berechnen der Düngemittelrate des Düngemittelproduktsatzes basierend auf dem Treiberdüngemittelprodukt und dem Satz von Nährstoffanforderungen ferner umfasst:
automatisches Aktualisieren des Satzes der Nährstoffanforderungen basierend auf der Berechnung der Düngemittelrate des Düngemittelproduktsatzes.

18. Computersystem nach einem der Ansprüche 14 bis 17, wobei das Berechnen der Düngemittelrate des Düngemittelproduktsatzes basierend auf dem Treiberdüngemittelprodukt und dem Satz von Nährstoffanforderungen ferner umfasst:
das Empfangen einer Anpassung von dem Benutzer;
das Anpassen der berechneten Düngemittelrate des Düngemittelproduktsatzes unter Verwendung der empfangenen Anpassung; und
automatisches erneutes Aktualisieren des Satzes von Nährstoffanforderungen.

19. Computersystem nach einem der Ansprüche 14 bis 18, wobei das Berechnen der Düngemittelrate des Düngemittelproduktsatzes basierend auf dem Treiberdüngemittelprodukt und dem Satz von Nährstoffanforderungen ferner umfasst:
Empfangen einer Rate für eines der Düngemittelprodukte aus dem Düngemittelproduktsatz von dem Benutzer;
Einstellen der empfangenen Rate als die Düngemittelrate des Düngemittelproduktsatzes; und
automatisches erneutes Aktualisieren des Satzes von Nährstoffanforderungen.

20. Computersystem nach einem der Ansprüche 14 bis 19, wobei das Erhalten des Düngemittelproduktsatzes zum Ausbringen auf die eine oder mehreren raumbezogenen Zonen umfasst:
Empfangen einer zweiten Benutzereingabe, die wenigstens ein benutzerausgewähltes Düngemittelprodukt für wenigstens einen des einen oder der mehreren Nährstoffe angibt; und
Hinzufügen des wenigstens einen benutzerausgewählten Düngemittelprodukts in den Düngemittelproduktsatz.

21. Computersystem nach einem der Ansprüche 14 bis 19, wobei das Erhalten des Düngemittelproduktsatzes zum Ausbringen auf die eine oder die mehreren raumbezogenen Zonen umfasst:
Empfangen einer dritten Benutzereingabe, die eine Vielzahl von benutzerausgewählten Düngemittelprodukten angibt, die in einem benutzerausgewählten Mischungsverhältnis gemischt werden sollen; und
Hinzufügen der gemischten Vielzahl von benutzerausgewählten Düngemittelprodukten zu dem Düngemittelproduktsatz.

22. Computersystem nach Anspruch 21, wobei der Prozessor (272) ferner dazu eingerichtet ist, die nachstehenden Schritte durchzuführen::
Empfangen einer vierten Benutzereingabe, die ein zweites Düngemittelprodukt aus dem Düngemittelproduktsatz als das Treiberdüngemittelprodukt angibt; und
Wiederholen des Berechnens der Düngemittelrate des Düngemittelproduktsatzes basierend auf dem Treiberdüngemittelprodukt und dem Satz von Nährstoffanforderungen.

23. Computersystem nach einem der Ansprüche 14 bis 19, wobei das Erhalten des Düngemittelproduktsatzes zum Ausbringen auf die eine oder mehreren raumbezogenen Zonen das Erhalten des Düngemittelproduktsatzes aus einer zweiten agronomischen Vorschrift umfasst; und
wobei das Berechnen der Düngemittelrate des Düngemittelproduktsatzes das Erhalten des Düngemittelproduktsatzes aus der zweiten agronomischen Vorschrift umfasst.

24. Computersystem nach einem der Ansprüche 14 bis 23, wobei der Prozessor (272) ferner dazu eingerichtet ist, den nachstehenden Schritt durchzuführen:
Speichern der ersten agronomischen Vorschrift in der einen oder den mehreren cloudbasierten Datenbanken (15).

25. Computersystem nach einem der Ansprüche 14 bis 24, wobei der Prozessor (272) ferner dazu eingerichtet ist, den nachstehenden Schritt durchzuführen:
Bereitstellen einer Arbeitsablaufschnittstelle zum Zugreifen auf und Modifizieren der ersten agronomischen Vorschrift.

26. Computersystem nach Anspruch 25, wobei das Bereitstellen der Arbeitsablaufschnittstelle zum Zugreifen auf und Modifizieren der ersten agronomischen Vorschrift umfasst:
Bereitstellen einer Arbeitsablaufschnittstelle zum erneuten Erhalten des Düngemittelproduktsatzes, der ein oder mehrere Düngemittelprodukte zum Ausbringen auf die eine oder mehreren raumbezogenen Zonen umfasst.

27. Computerlesbare Speichervorrichtung, die computerausführbare Anweisungen zur optimalen Produktion einer ausgewählten Nutzpflanze umfasst, die auf einem Feld mit einer oder mehreren raumbezogenen Zonen angebaut werden soll, wobei die Anweisungen, wenn sie in einen Speicher (276) einer einzelnen computerisierten Plattform geladen und ausgeführt werden, einen Prozessor (272) veranlassen, Aktionen durchzuführen, die Nachstehendes umfassen:
Sammeln und Speichern eines Satzes von Parametern der einen oder mehreren raumbezogenen Zonen;
automatisches Erzeugen eines Satzes von Nährstoffanforderungen für einen oder mehrere Nährstoffe;
Erhalten eines Düngemittelproduktsatzes, der ein oder mehrere Düngemittelprodukte zum Ausbringen auf die eine oder mehreren raumbezogenen Zonen umfasst; und
Bestimmen einer ersten agronomischen Vorschrift zum Ausbringen des Düngemittelproduktsatzes auf die eine oder mehreren raumbezogenen Zonen mit einer Düngemittelrate zum Anbau der ausgewählten Nutzpflanze;
wobei die computerlesbare Speichervorrichtung **dadurch gekennzeichnet ist, dass**:
das Sammeln und Speichern eines Satzes von Parametern umfasst:
das Sammeln und Speichern eines Satzes von Parametern mit wenigstens Bodenuntersuchungsdaten, vordefinierten agronomischen Nutzpflanzenbedürfnissen und Ertragszielen der einen oder mehreren raumbezogenen Zonen in einer oder mehreren cloudbasierten Datenbanken (15);
das automatische Erzeugen des Satzes von Nährstoffanforderungen des einen oder der mehreren Nährstoffe umfasst:
das Sammeln und Speichern von Satellitenbildern der einen oder mehreren raumbezogenen Zonen in einer oder mehreren cloudbasierten Datenbanken (15),
automatisches Erhalten einer raumbezogenen Zonenabgrenzung der einen oder mehreren raumbezogenen Zonen aus den Satellitenbildern, und
automatisches Erzeugen des Satzes von Nährstoffanforderungen des einen oder der mehreren Nährstoffe wenigstens basierend auf den Bodenuntersuchungsdaten, der raumbezogenen Zonenabgrenzung, den vordefinierten agronomischen Nutzpflanzenbedürfnissen und den Ertragszielen; und
die Anweisungen, wenn sie in den Speicher (276) der einzelnen computerisierten Plattform geladen und ausgeführt werden, den Prozessor (272) ferner veranlassen, Aktionen durchzuführen, die Nachstehendes umfassen:
Empfangen einer ersten Benutzereingabe, die ein erstes Düngemittelprodukt aus dem Düngemittelproduktsatz als ein Treiberdüngemittelprodukt angibt, und
Berechnen der Düngemittelrate des Düngemittelproduktsatzes basierend auf dem Treiberdüngemittelprodukt und dem Satz von Nährstoffanforderungen.

28. Computerlesbare Speichervorrichtung nach Anspruch 27, wobei der eine oder die mehreren Nährstoffe wenigstens Stickstoff (N), Phosphor (P) oder Kalium (K) umfassen.

29. Computerlesbare Speichervorrichtung nach Anspruch 27 oder 28, wobei der Satz von Nährstoffanforderungen einen oder mehrere Mikronährstoffe umfasst.

30. Computerlesbare Speichervorrichtung nach einem der Ansprüche 27 bis 29, wobei das Berechnen der Düngemittelrate des Düngemittelproduktsatzes basierend auf dem Treiberdüngemittelprodukt und dem Satz von Nährstoffanforderungen ferner umfasst:
automatisches Aktualisieren des Satzes der Nährstoffanforderungen basierend auf der Berechnung der Düngemittelrate des Düngemittelproduktsatzes.

31. Computerlesbare Speichervorrichtung nach einem der Ansprüche 27 bis 30, wobei das Berechnen der Düngemittelrate des Düngemittelproduktsatzes basierend auf dem Treiberdüngemittelprodukt und dem Satz von Nährstoffanforderungen ferner umfasst:
das Empfangen einer Anpassung von dem Benutzer;
das Anpassen der berechneten Düngemittelrate des Düngemittelproduktsatzes unter Verwendung der empfangenen Anpassung; und
automatisches erneutes Aktualisieren des Satzes von Nährstoffanforderungen.

32. Computerlesbare Speichervorrichtung nach einem der Ansprüche 27 bis 31, wobei das Berechnen der Düngemittelrate des Düngemittelproduktsatzes basierend auf dem Treiberdüngemittelprodukt und dem Satz von Nährstoffanforderungen ferner umfasst:
Empfangen einer Rate für eines der Düngemittelprodukte aus dem Düngemittelproduktsatz von dem Benutzer;
Einstellen der empfangenen Rate als die Düngemittelrate des Düngemittelproduktsatzes; und
automatisches erneutes Aktualisieren des Satzes von Nährstoffanforderungen.

33. Computerlesbare Speichervorrichtung nach einem der Ansprüche 27 bis 32, wobei das Erhalten des Düngemittelproduktsatzes zum Ausbringen auf die eine oder mehreren raumbezogenen Zonen umfasst:
Empfangen einer zweiten Benutzereingabe, die wenigstens ein benutzerausgewähltes Düngemittelprodukt für wenigstens einen des einen oder der mehreren Nährstoffe angibt; und
Hinzufügen des wenigstens einen benutzerausgewählten Düngemittelprodukts in den Düngemittelproduktsatz.

34. Computerlesbare Speichervorrichtung nach einem der Ansprüche 27 bis 32, wobei das Erhalten des Düngemittelproduktsatzes zum Ausbringen auf die eine oder die mehreren raumbezogenen Zonen umfasst:
Empfangen einer dritten Benutzereingabe, die eine Vielzahl von benutzerausgewählten Düngemittelprodukten angibt, die in einem benutzerausgewählten Mischungsverhältnis gemischt werden sollen; und
Hinzufügen der gemischten Vielzahl von benutzerausgewählten Düngemittelprodukten zu dem Düngemittelproduktsatz.

35. Computerlesbare Speichervorrichtung nach Anspruch 34, wobei die Anweisungen, wenn sie in den Speicher (276) der einzelnen computerisierten Plattform geladen und ausgeführt werden, den Prozessor (272) ferner veranlassen, Aktionen durchzuführen, die Nachstehendes umfassen:
Empfangen einer vierten Benutzereingabe, die ein zweites Düngemittelprodukt aus dem Düngemittelproduktsatz als das Treiberdüngemittelprodukt angibt; und
Wiederholen des Berechnens der Düngemittelrate des Düngemittelproduktsatzes basierend auf dem Treiberdüngemittelprodukt und dem Satz von Nährstoffanforderungen.

36. Computerlesbare Speichervorrichtung nach einem der Ansprüche 27 bis 32, wobei das Erhalten des Düngemittelproduktsatzes zum Ausbringen auf die eine oder mehreren raumbezogenen Zonen das Erhalten des Düngemittelproduktsatzes aus einer zweiten agronomischen Vorschrift umfasst; und
wobei das Berechnen der Düngemittelrate des Düngemittelproduktsatzes das Erhalten des Düngemittelproduktsatzes aus der zweiten agronomischen Vorschrift umfasst.

37. Computerlesbare Speichervorrichtung nach einem der Ansprüche 27 bis 36, wobei die Anweisungen, wenn sie in den Speicher (276) der einzelnen computerisierten Plattform geladen und ausgeführt werden, den Prozessor (272) ferner veranlassen, Aktionen durchzuführen, die Nachstehendes umfassen:
Speichern der ersten agronomischen Vorschrift in der einen oder den mehreren cloudbasierten Datenbanken (15).

38. Computerlesbare Speichervorrichtung nach einem der Ansprüche 27 bis 37, wobei die Anweisungen, wenn sie in den Speicher (276) der einzelnen computerisierten Plattform geladen und ausgeführt werden, den Prozessor (272) ferner veranlassen, Aktionen durchzuführen, die Nachstehendes umfassen:
Bereitstellen einer Arbeitsablaufschnittstelle zum Zugreifen auf und Modifizieren der ersten agronomischen Vorschrift.

39. Computerlesbare Speichervorrichtung nach Anspruch 38, wobei das Bereitstellen der Arbeitsablaufschnittstelle zum Zugreifen auf und Modifizieren der ersten agronomischen Vorschrift umfasst:
Bereitstellen einer Arbeitsablaufschnittstelle zum erneuten Erhalten des Düngemittelproduktsatzes, der ein oder mehrere Düngemittelprodukte zum Ausbringen auf die eine oder mehreren raumbezogenen Zonen umfasst.

## Revendications

1. - Procédé mis en œuvre par ordinateur pour la production optimale d'une culture sélectionnée à cultiver sur un champ ayant une ou plusieurs zones géospatiales, le procédé comprenant :
collecter et stocker un ensemble de paramètres de la ou des zones géospatiales ;
produire automatiquement un ensemble de besoins en nutriments d'un ou plusieurs nutriments ;
obtenir un ensemble de produits d'engrais comprenant un ou plusieurs produits d'engrais pour application à la ou aux zones géospatiales ; et
déterminer une première prescription agronomique pour appliquer l'ensemble de produits d'engrais à la ou aux zones géospatiales à un taux d'engrais pour cultiver la culture sélectionnée ;
le procédé mis en œuvre par ordinateur étant **caractérisé par le fait que** :
ladite collecte et ledit stockage d'un ensemble de paramètres comprennent :
collecter et stocker, dans une ou plusieurs bases de données en nuage (15), l'ensemble de paramètres comprenant au moins des données d'analyse de sol, des besoins de culture agronomiques prédéfinis et des objectifs de rendement de la ou des zones géospatiales ;
ladite production automatique de l'ensemble de besoins en nutriments du ou des nutriments comprend :
collecter et stocker, dans la ou les bases de données en nuage (15), une imagerie par satellite de la ou des zones géospatiales ;
obtenir automatiquement une délimitation de zone géospatiale de la ou des zones géospatiales à partir de l'imagerie par satellite ; et
produire automatiquement l'ensemble de besoins en nutriments du ou des nutriments au moins sur la base des données d'analyse de sol, de la délimitation de zone géospatiale, des besoins de culture agronomiques prédéfinis et des objectifs de rendement ; et
le procédé mis en œuvre par ordinateur comprend en outre :
recevoir une première entrée utilisateur indiquant un premier produit d'engrais, parmi l'ensemble de produits d'engrais, comme produit d'engrais pilote ; et
calculer le taux d'engrais de l'ensemble de produits d'engrais sur la base du produit d'engrais pilote et de l'ensemble de besoins en nutriments.

2. - Procédé mis en œuvre par ordinateur selon la revendication 1, dans lequel le ou les nutriments comprennent au moins l'un parmi l'azote (N), le phosphore (P) et le potassium (K).

3. - Procédé mis en œuvre par ordinateur selon la revendication 1 ou 2, dans lequel l'ensemble de besoins en nutriments comprend un ou plusieurs micronutriments.

4. - Procédé mis en œuvre par ordinateur selon l'une quelconque des revendications 1 à 3, dans lequel ledit calcul du taux d'engrais de l'ensemble de produits d'engrais sur la base du produit d'engrais pilote et de l'ensemble de besoins en nutriments comprend en outre :
mettre automatiquement à jour l'ensemble de besoins en nutriments sur la base dudit calcul du taux d'engrais de l'ensemble de produits d'engrais.

5. - Procédé mis en œuvre par ordinateur selon l'une quelconque des revendications 1 à 4, dans lequel ledit calcul du taux d'engrais de l'ensemble de produits d'engrais sur la base du produit d'engrais pilote et de l'ensemble de besoins en nutriments comprend en outre :
recevoir un ajustement de la part de l'utilisateur ;
ajuster le taux d'engrais calculé de l'ensemble de produits d'engrais en utilisant l'ajustement reçu ; et
remettre automatiquement à jour l'ensemble de besoins en nutriments.

6. - Procédé mis en œuvre par ordinateur selon l'une quelconque des revendications 1 à 5, dans lequel ledit calcul du taux d'engrais de l'ensemble de produits d'engrais sur la base du produit d'engrais pilote et de l'ensemble de besoins en nutriments comprend en outre :
recevoir, en provenance de l'utilisateur, un taux pour l'un de l'ensemble de produits d'engrais ;
définir le taux reçu comme taux d'engrais de l'ensemble de produits d'engrais ; et
remettre automatiquement à jour l'ensemble de besoins en nutriments.

7. - Procédé mis en œuvre par ordinateur selon l'une quelconque des revendications 1 à 6, dans lequel ladite obtention de l'ensemble de produits d'engrais pour application à la ou aux plusieurs zones géospatiales comprend :
recevoir une deuxième entrée utilisateur indiquant au moins un produit d'engrais sélectionné par l'utilisateur pour au moins un du ou des nutriments ; et
inclure dans l'ensemble de produits d'engrais l'au moins un produit d'engrais sélectionné par l'utilisateur.

8. - Procédé mis en œuvre par ordinateur selon l'une quelconque des revendications 1 à 6, dans lequel ladite obtention de l'ensemble de produits d'engrais pour application à la ou aux zones géospatiales comprend :
recevoir une troisième entrée utilisateur indiquant une pluralité de produits d'engrais sélectionnés par l'utilisateur à mélanger à un rapport de mélange sélectionné par l'utilisateur ; et
inclure dans l'ensemble de produits d'engrais la pluralité mélangée de produits d'engrais sélectionnés par l'utilisateur.

9. - Procédé mis en œuvre par ordinateur selon la revendication 8, comprenant en outre :
recevoir une quatrième entrée utilisateur indiquant un second produit d'engrais, parmi l'ensemble de produits d'engrais, comme produit d'engrais pilote ; et
répéter ledit calcul du taux d'engrais de l'ensemble de produits d'engrais sur la base du produit d'engrais pilote et de l'ensemble de besoins en nutriments.

10. - Procédé mis en œuvre par ordinateur selon l'une quelconque des revendications 1 à 6, dans lequel ladite obtention de l'ensemble de produits d'engrais pour application à la ou aux zones géospatiales comprend obtenir l'ensemble de produits d'engrais à partir d'une seconde prescription agronomique ; et
dans lequel ledit calcul du taux d'engrais de l'ensemble de produits d'engrais comprend obtenir l'ensemble de produits d'engrais à partir de la seconde prescription agronomique.

11. - Procédé mis en œuvre par ordinateur selon l'une quelconque des revendications 1 à 10, comprenant en outre :
sauvegarder la première prescription agronomique dans la ou les bases de données en nuage (15).

12. - Procédé mis en œuvre par ordinateur selon l'une quelconque des revendications 1 à 11, comprenant en outre :
fournir une interface de flux de travaux pour accéder à et modifier la première prescription agronomique.

13. - Procédé mis en œuvre par ordinateur selon la revendication 12, dans lequel ladite fourniture de l'interface de flux de travaux pour accéder à et modifier la première prescription agronomique comprend :
fournir une interface de flux de travaux pour obtenir à nouveau l'ensemble de produits d'engrais comprenant un ou plusieurs produits d'engrais pour application à la ou aux zones géospatiales.

14. - Système informatique (1) pour la production optimale d'une culture sélectionnée à cultiver sur un champ ayant une ou plusieurs zones géospatiales, le système informatique (1) comprenant :
une mémoire (276) ;
une ou plusieurs bases de données en nuage (15) ;
un réseau ou une connexion de communication (206) ; et
un processeur (272) pour communication avec la mémoire (276), la ou les bases de données en nuage (15) et le réseau ou la connexion de communication (206) ;
le processeur, la mémoire, la ou les bases de données en nuage et le réseau ou la connexion de communication formant une unique plate-forme informatisée ; et
le processeur (272) étant configuré pour exécuter les étapes suivantes :
collecter et stocker un ensemble de paramètres de la ou des zones géospatiales ;
produire automatiquement un ensemble de besoins en nutriments d'un ou plusieurs nutriments ;
obtenir un ensemble de produits d'engrais comprenant un ou plusieurs produits d'engrais pour application à la ou aux zones géospatiales ; et
déterminer une première prescription agronomique pour appliquer l'ensemble de produits d'engrais à la ou aux zones géospatiales à un taux d'engrais pour cultiver la culture sélectionnée ;
le système informatique (1) étant **caractérisé par le fait que** :
ladite collecte et ledit stockage d'un ensemble de paramètres comprennent :
collecter et stocker, dans une ou plusieurs bases de données en nuage (15), l'ensemble de paramètres comprenant au moins des données d'analyse de sol, des besoins de culture agronomiques prédéfinis et des objectifs de rendement de la ou des zones géospatiales ;
ladite production automatique de l'ensemble de besoins en nutriments du ou des nutriments comprend :
collecter et stocker, dans la ou les bases de données en nuage (15), une imagerie par satellite de la ou des zones géospatiales ;
obtenir automatiquement une délimitation de zone géospatiale de la ou des zones géospatiales à partir de l'imagerie par satellite ; et
produire automatiquement l'ensemble de besoins en nutriments du ou des nutriments au moins sur la base des données d'analyse de sol, de la délimitation de zone géospatiale, des besoins de culture agronomiques prédéfinis et des objectifs de rendement ; et
le processeur (272) étant en outre configuré pour exécuter les étapes suivantes :
recevoir une première entrée utilisateur indiquant un premier produit d'engrais, parmi l'ensemble de produits d'engrais, comme produit d'engrais pilote ; et
calculer le taux d'engrais de l'ensemble de produits d'engrais sur la base du produit d'engrais pilote et de l'ensemble de besoins en nutriments.

15. - Système informatique selon la revendication 14, dans lequel le ou les nutriments comprennent au moins l'un parmi l'azote (N), le phosphore (P) et le potassium (K) .

16. - Système informatique selon la revendication 14 ou 15, dans lequel l'ensemble de besoins en nutriments comprend des besoins d'un ou plusieurs micronutriments.

17. - Système informatique selon l'une quelconque des revendications 14 à 16, dans lequel ledit calcul du taux d'engrais de l'ensemble de produits d'engrais sur la base du produit d'engrais pilote et de l'ensemble de besoins en nutriments comprend en outre :
mettre à jour automatiquement l'ensemble de besoins en nutriments sur la base dudit calcul du taux d'engrais de l'ensemble de produits d'engrais.

18. - Système informatique selon l'une quelconque des revendications 14 à 17, dans lequel ledit calcul du taux d'engrais de l'ensemble de produits d'engrais sur la base du produit d'engrais pilote et de l'ensemble de besoins en nutriments comprend en outre :
recevoir un ajustement de la part de l'utilisateur ;
ajuster le taux d'engrais calculé de l'ensemble de produits d'engrais en utilisant l'ajustement reçu ; et
remettre automatiquement à jour l'ensemble de besoins en nutriments.

19. - Système informatique selon l'une quelconque des revendications 14 à 18, dans lequel ledit calcul du taux d'engrais de l'ensemble de produits d'engrais sur la base du produit d'engrais pilote et de l'ensemble de besoins en nutriments comprend en outre :
recevoir, en provenance de l'utilisateur, un taux pour l'un de l'ensemble de produits d'engrais ;
définir le taux reçu comme taux d'engrais de l'ensemble de produits d'engrais ; et
remettre automatiquement à jour l'ensemble de besoins en nutriments.

20. - Système informatique selon l'une quelconque des revendications 14 à 19, dans lequel ladite obtention de l'ensemble de produits d'engrais pour application à la ou aux zones géospatiales comprend :
recevoir une deuxième entrée utilisateur indiquant au moins un produit d'engrais sélectionné par l'utilisateur pour au moins un du ou des nutriments ; et
inclure dans l'ensemble de produits d'engrais l'au moins un produit d'engrais sélectionné par l'utilisateur.

21. - Système informatique selon l'une quelconque des revendications 14 à 19, dans lequel ladite obtention de l'ensemble de produits d'engrais pour application à la ou aux zones géospatiales comprend :
recevoir une troisième entrée utilisateur indiquant une pluralité de produits d'engrais sélectionnés par l'utilisateur à mélanger à un rapport de mélange sélectionné par l'utilisateur ; et
inclure dans l'ensemble de produits d'engrais la pluralité mélangée de produits d'engrais sélectionnés par l'utilisateur.

22. - Système informatique selon la revendication 21, dans lequel le processeur (272) est en outre configuré pour :
recevoir une quatrième entrée utilisateur indiquant un second produit d'engrais, parmi l'ensemble de produits d'engrais, comme produit d'engrais pilote ; et
répéter ledit calcul du taux d'engrais de l'ensemble de produits d'engrais sur la base du produit d'engrais pilote et de l'ensemble de besoins en nutriments.

23. - Système informatique selon l'une quelconque des revendications 14 à 19, dans lequel ladite obtention de l'ensemble de produits d'engrais pour application à la ou aux zones géospatiales comprend obtenir l'ensemble de produits d'engrais à partir d'une seconde prescription agronomique ; et
dans lequel ledit calcul du taux d'engrais de l'ensemble de produits d'engrais comprend obtenir l'ensemble de produits d'engrais à partir de la seconde prescription agronomique.

24. - Système informatique selon l'une quelconque des revendications 14 à 23, dans lequel le processeur (272) est en outre configuré pour :
sauvegarder la première prescription agronomique dans la ou les bases de données en nuage (15).

25. - Système informatique selon l'une quelconque des revendications 14 à 24, dans lequel le processeur (272) est en outre configuré pour :
fournir une interface de flux de travaux pour accéder à et modifier la première prescription agronomique.

26. - Système informatique selon la revendication 25, dans lequel ladite fourniture de l'interface de flux de travaux pour accéder à et modifier la première prescription agronomique comprend :
fournir une interface de flux de travaux pour obtenir à nouveau l'ensemble de produits d'engrais comprenant un ou plusieurs produits d'engrais pour application à la ou aux zones géospatiales.

27. - Dispositif de stockage lisible par ordinateur, comprenant des instructions exécutables par ordinateur pour la production optimale d'une culture sélectionnée à cultiver sur un champ ayant une ou plusieurs zones géospatiales, dans lequel les instructions, lorsqu'elles sont chargées dans une mémoire (276) d'une unique plate-forme informatisée et exécutées, amènent un processeur (272) à effectuer des actions comprenant :
collecter et stocker un ensemble de paramètres de la ou des zones géospatiales ;
produire automatiquement un ensemble de besoins en nutriments d'un ou plusieurs nutriments ;
obtenir un ensemble de produits d'engrais comprenant un ou plusieurs produits d'engrais pour application à la ou aux zones géospatiales ;
déterminer une première prescription agronomique pour appliquer l'ensemble de produits d'engrais à la ou aux zones géospatiales à un taux d'engrais pour cultiver la culture sélectionnée ;
le dispositif de stockage lisible par ordinateur étant **caractérisé par le fait que** :
ladite collecte et ledit stockage d'un ensemble de paramètres comprennent :
collecter et stocker, dans une ou plusieurs bases de données en nuage (15), l'ensemble de paramètres comprenant au moins des données d'analyse de sol, des besoins de culture agronomiques prédéfinis et des objectifs de rendement de la ou des zones géospatiales ;
ladite production automatique de l'ensemble de besoins en nutriments du ou des nutriments comprend :
collecter et stocker, dans la ou les bases de données en nuage (15), une imagerie par satellite de la ou des zones géospatiales ;
obtenir automatiquement une délimitation de zone géospatiale de la ou des zones géospatiales à partir de l'imagerie par satellite ; et
produire automatiquement l'ensemble de besoins en nutriments du ou des nutriments au moins sur la base des données d'analyse de sol, de la délimitation de zone géospatiale, des besoins de culture agronomiques prédéfinis et des objectifs de rendement ; et
les instructions, lorsqu'elles sont chargées dans la mémoire (276) de l'unique plate-forme informatisée et exécutées, amènent en outre le processeur (272) à effectuer des actions comprenant :
recevoir une première entrée utilisateur indiquant un premier produit d'engrais, parmi l'ensemble de produits d'engrais, comme produit d'engrais pilote ; et
calculer le taux d'engrais de l'ensemble de produits d'engrais sur la base du produit d'engrais pilote et de l'ensemble de besoins en nutriments.

28. - Dispositif de stockage lisible par ordinateur selon la revendication 27, dans lequel le ou les nutriments comprennent au moins l'un parmi l'azote (N), le phosphore (P) et le potassium (K).

29. - Dispositif de stockage lisible par ordinateur selon la revendication 27 ou 28, dans lequel l'ensemble de besoins en nutriments comprend des besoins d'un ou plusieurs micronutriments.

30. - Dispositif de stockage lisible par ordinateur selon l'une quelconque des revendications 27 à 29, dans lequel ledit calcul du taux d'engrais de l'ensemble de produits d'engrais sur la base du produit d'engrais pilote et de l'ensemble de besoins en nutriments comprend en outre :
mettre à jour automatiquement l'ensemble de besoins en nutriments sur la base dudit calcul du taux d'engrais de l'ensemble de produits d'engrais.

31. - Dispositif de stockage lisible par ordinateur selon l'une quelconque des revendications 27 à 30, dans lequel ledit calcul du taux d'engrais de l'ensemble de produits d'engrais sur la base du produit d'engrais pilote et de l'ensemble de besoins en nutriments comprend en outre :
recevoir un ajustement de la part de l'utilisateur ;
ajuster le taux d'engrais calculé de l'ensemble de produits d'engrais en utilisant l'ajustement reçu ; et
remettre automatiquement à jour l'ensemble de besoins en nutriments.

32. - Dispositif de stockage lisible par ordinateur selon l'une quelconque des revendications 27 à 31, dans lequel ledit calcul du taux d'engrais de l'ensemble de produits d'engrais sur la base du produit d'engrais pilote et de l'ensemble de besoins en nutriments comprend en outre :
recevoir, en provenance de l'utilisateur, un taux pour l'un de l'ensemble de produits d'engrais ;
définir le taux reçu comme taux d'engrais de l'ensemble de produits d'engrais ; et
remettre automatiquement à jour l'ensemble de besoins en nutriments.

33. - Dispositif de stockage lisible par ordinateur selon l'une quelconque des revendications 27 à 32, dans lequel ladite obtention de l'ensemble de produits d'engrais pour application à la ou aux zones géospatiales comprend :
recevoir une deuxième entrée utilisateur indiquant au moins un produit d'engrais sélectionné par l'utilisateur pour au moins un du ou des nutriments ; et
inclure dans l'ensemble de produits d'engrais l'au moins un produit d'engrais sélectionné par l'utilisateur.

34. - Dispositif de stockage lisible par ordinateur selon l'une quelconque des revendications 27 à 32, dans lequel ladite obtention de l'ensemble de produits d'engrais pour application à la ou aux zones géospatiales comprend :
recevoir une troisième entrée utilisateur indiquant une pluralité de produits d'engrais sélectionnés par l'utilisateur à mélanger à un rapport de mélange sélectionné par l'utilisateur ; et
inclure dans l'ensemble de produits d'engrais la pluralité mélangée de produits d'engrais sélectionnés par l'utilisateur.

35. - Dispositif de stockage lisible par ordinateur selon la revendication 34, dans lequel les instructions, lorsqu'elles sont chargées dans la mémoire (276) de l'unique plate-forme informatisée et exécutées, amènent en outre le processeur (272) à effectuer des actions comprenant :
recevoir une quatrième entrée utilisateur indiquant un second produit d'engrais parmi l'ensemble de produits d'engrais comme produit d'engrais pilote ; et
répéter ledit calcul du taux d'engrais de l'ensemble de produits d'engrais sur la base du produit d'engrais pilote et de l'ensemble de besoins en nutriments.

36. - Dispositif de stockage lisible par ordinateur selon l'une quelconque des revendications 27 à 32, dans lequel ladite obtention de l'ensemble de produits d'engrais pour application à la ou aux zones géospatiales comprend obtenir l'ensemble de produits d'engrais à partir d'une seconde prescription agronomique ; et
dans lequel ledit calcul du taux d'engrais de l'ensemble de produits d'engrais comprend obtenir l'ensemble de produits d'engrais à partir de la seconde prescription agronomique.

37. - Dispositif de stockage lisible par ordinateur selon l'une quelconque des revendications 27 à 36, dans lequel les instructions, lorsqu'elles sont chargées dans la mémoire (276) de l'unique plateforme informatisée et exécutées, amènent en outre le processeur (272) à effectuer des actions comprenant :
sauvegarder la première prescription agronomique dans la ou les bases de données en nuage (15).

38. - Dispositif de stockage lisible par ordinateur selon l'une quelconque des revendications 27 à 37, dans lequel les instructions, lorsqu'elles sont chargées dans la mémoire (276) de l'unique plateforme informatisée et exécutées, amènent en outre le processeur (272) à effectuer des actions comprenant :
fournir une interface de flux de travaux pour accéder à et modifier la première prescription agronomique.

39. - Dispositif de stockage lisible par ordinateur selon la revendication 38, dans lequel ladite fourniture de l'interface de flux de travaux pour accéder à et modifier la première prescription agronomique comprend :
fournir une interface de flux de travaux pour obtenir à nouveau l'ensemble de produits d'engrais comprenant un ou plusieurs produits d'engrais pour application à la ou aux zones géospatiales.
